# EUROPÄISCHE PATENTSCHRIFT

(11) **EP 1 771 705 B1**
(45) Veröffentlichungstag und Bekanntmachung des Hinweises auf die Patenterteilung: **07.11.2018**
(21) Anmeldenummer: 05761002.4
(22) Anmeldetag: 28.06.2005
(51) Int. Cl.: G01F 1/84, G01N 9/00, G01N 11/16

(54) **IN-LINE-MESSGERÄT MIT EINEM MESSAUFNEHMER VOM VIBRATIONSTYP ZUM MESSEN VON IN ZWEI MEDIUMSLEITUNGEN STRÖMENDEN MEDIEN**
IN-LINE MEASURING DEVICE EQUIPPED WITH A VIBRATION-TYPE MEASURING SENSOR FOR CONDUCTING FLOW MEASUREMENTS OF MEDIA FLOWING INSIDE TWO MEDIUM CONDUITS
APPAREIL DE MESURE EN LIGNE EQUIPE D'UN CAPTEUR DE MESURE DE TYPE A VIBRATIONS, DESTINE A MESURER DES FLUIDES S'ECOULANT DANS DEUX CONDUITES

(30) Priorität: 23.07.2004 DE 102004035971
(43) Veröffentlichungstag der Anmeldung: 11.04.2007
(73) Patentinhaber: Endress+Hauser Flowtec AG, 4153 Reinach (CH)
(72) Erfinder: BITTO, Ennio, CH-4147 Aesch (CH); BERNHARD, Holger, 79639 Grenzach-Wyhlen (DE)
(74) Vertreter: Andres, Angelika Maria
(86) Internationale Anmeldenummer: PCT/EP2005/053046
(87) Internationale Veröffentlichungsnummer: WO 2006/010687

(56) Entgegenhaltungen:
- EP-A- 1 260 798
- EP-A- 1 296 128
- DE-A1- 3 503 841
- US-A- 5 090 253
- US-A- 5 969 264

## Beschreibung

Die Erfindung betrifft ein In-Line-Messgerät mit einem Messaufnehmer vom Vibrationstyp zum Messen von in zwei Mediumsleitungen strömenden Medien.

Zum Messen bzw. zum Erfassen einer Prozeßgröße von in Leitungen, insb. Rohrleitungen, strömenden Medien, insb. zum Erfassen strömungsdynamischer und/oder rheologischer Meßgrößen, werden oftmals solche In-Line-Meßgeräte verwendet, die mittels eines in den Verlauf der mediumsführenden Rohr- oder Schlauchleitung eingesetzten, im Betrieb vom Medium durchströmten Meßaufnehmers vom Vibrationstyp sowie einer daran angeschlossenen Meß- und Betriebsschaltung, im Medium Reaktionskräfte, wie z.B. mit dem Massedurchfluß korrespondierende Corioliskräfte, mit der Dichte korrespondierende Trägheitskräfte oder mit der Viskosität korrespondierende Reibungskräfte etc., bewirken und von diesen abgeleitet ein den jeweiligen Massedurchfluß, ein die jeweilige Viskosität und/oder ein die jeweilige Dichte des Mediums repräsentierendes Meßsignal erzeugen. Der Meßaufnehmer ist dabei z.B. mittels Flanschen mediumsdicht, insb. druckdicht, und zumeist auch dauerhaft mit der das Medium führenden Leitung verbunden.

Zum Betrieb des Meßaufnehmers, insb. auch zur Weiterverarbeitung oder Auswertung des wenigstens einen Meßsignals, ist dieser ferner mit einer entsprechenden Meßgerät-Elektronik verbunden. Bei In-Line-Meßgeräte der beschriebenen Art ist die Meßgerät-Elektronik wiederum üblicherweise über ein angeschlossenes Datenübertragungs-System mit anderen Meßgeräten und/oder mit einem entsprechenden Zentralrechner verbunden, wohin sie die Messwertsignale, z.B. via digitalen Daten-Bus, sendet. Als Datenübertragungs-Systeme dienen hierbei oftmals, insb. serielle, Bus-Systeme, wie z.B. PROFIBUS-PA, FOUNDATION FIELDBUS sowie die entsprechenden Übertragungs-Protokolle. Mittels des Zentralrechner können die übertragenen Meßwertsignale weiterverarbeitet und als entsprechende Meßergebnisse z.B. auf Monitoren visualisiert und/oder in Steuersignale für entsprechende Stellglieder, wie z.B. Magnet-Ventile, Elektro-Motoren von Pumpen etc., umgewandelt werden. Zur Aufnahme der Meßgerät-Elektronik umfassen solche In-Line-Meßgeräte ferner ein Elektronik-Gehäuse, das, wie z.B. in der WO-A 00/36379 vorgeschlagen, vom Meßaufnehmer entfernt angeordnet und mit diesem nur über eine flexible Leitung verbunden sein kann oder das, wie z.B. auch in der EP-A 1 296 128 oder der
WO-A 02/099363 gezeigt, direkt am Meßaufnehmer, insb. auf einem den Meßaufnehmer einhausenden Meßaufnehmer-Gehäuse, angeordnet

Weitere Beispiele für dem Fachmann hinreichend bekannte In-Line-Messgeräte sind in der DE 35 03 841 A1, der EP 1 260 798 A oder der US 5 090 253A detailliert beschrieben.

Im besonderen eignen sich solche In-Line-Meßgeräte mit einem Meßaufnehmer vom Vibrationstyp auch zur direkten Messung einer Massendurchfluß-Bilanz, insb. einer Massendurchfluss-Differenz, von zwei gleichzeitig strömenden und in verschiedenen Mediumsleitungen geführten Medien. Solche Bilanzmessungen dienen zumeist dazu, den Inhalt und/oder die Dichtigkeit eines Behälters mit angeschlossenem Leitungssystem durch gleichzeitiges Messen der zulaufenden Mediumsströmung und der ablaufenden Mediumsströmung zu überwachen. Entsprechende Anwendungsfälle für solche Bilanzmessungen finden sich beispielsweise im Bereich der Medizintechnik, insb. bei der Bluttransfusion oder Dialyse, oder auch im Bereich der Lackiertechnik, insb. bei der Mischung von Farben. Geeignete Bilanz-Meßsysteme, die unter Verwendung von In-Line-Meßgeräten der beschriebenen Art, insb. Coriolis-Massendurchfluß-Meßgeräten, Bilanzen zweier Massenströme messen, sind z.B. in der der EP-A 441 328, der
EP-A 244 692, der US-B 64 57 372, der US-A 61 38 517 oder der
US-A 42 52 028 beschrieben.

Zum Führen des Mediums umfassen die darin gezeigten Meßaufnehmer vom Vibrationstyp jeweils zwei in einem, beispielsweise rohr- oder kastenförmigen, Rahmen gehalterte Meßrohre, von denen jedes zum Erzeugen oben genannter Reaktionskräfte im Betrieb - angetrieben von einer elektro-mechanischen Erregeranordnung - vibrieren gelassen wird. Eines der Meßrohre ist jeweils dafür bestimmt, in den Verlauf einer das in obigem Sinne zulaufende Medium führenden ersten Mediumsleitung eingesetzt zu werden, während das andere Meßrohr für das in einer zweiten Mediumsleitung geführte, in obigem Sinne ablaufende Medium vorgesehen ist. Zum Erfassen, insb. einlaßseitiger und auslaßseitiger, Vibrationen der Meßrohre weisen die Meßaufnehmer ferner jeweils eine auf Bewegungen der schwingenden reagierende physikalischelektrische Sensoranordnung auf.

Bei Coriolis-Massedurchflußmeßgeräten beruht die Messung des Massedurchflusses eines strömenden Mediums bekanntermaßen darauf, daß Medium durch jedes der im Betrieb lateral zu einer Schwingungsachse schwingenden Meßrohre strömen gelassen wird, wodurch im jeweiligen Medium Corioliskräfte induziert werden. Diese wiederum bewirken, daß einlaßseitige und auslaßseitige Bereiche des jeweiligen Meßrohrs zueinander phasenverschoben schwingen, wobei die Größe dieser Phasenverschiebungen ein Maß für den momentanen Massedurchfluß im Meßrohr ist. Die Schwingungen jedes der Meßrohe werden daher mittels zweier entlang des jeweiligen Meßrohres voneinander beabstandeter Schwingungssensoren der vorgenannten Sensoranordnung örtlich erfaßt und in entsprechende Schwingungsmeßsignale gewandelt. Aus deren gegenseitiger Phasenverschiebung kann dann der Massedurchfluß abgeleitet werden.

Bei Bilanz-Meßsystemen der beschriebenen Art sind die Meßaufnehmer betriebsgemäß zumindest zeitweise gleichzeitig von zwei Medien durchströmt, die zumindest in einer physikalischen Eigenschaft, beispielsweise dem Massendurchfluß, der Dichte, der Viskosität, und/oder der Temperatur, unterschiedlich ausgebildet sind. Infolgedessen können die Meßrohre während des Betriebes des In-Line-Meßgeräts in ihren mechanischen Schwingungseigenschaften, beispielsweise in den momentanen Schwingungsamplituden und/oder den momentanen Schwingungsfrequenzen, erheblich voneinander abweichen, obwohl sie nominell praktisch identisch aufgebaut sind. Dies kann infolge der mechanischen Kopplung zwischen den einzelnen Meßrohren, wie beispielsweise auch in der bereits erwähnten US-B 64 57 372 diskutiert, zu erheblichen Fehlern in der gemessen Bilanz der beiden Mediumsströme, beispielsweise also der gemessenen Massendurchfluß-Differenz, führen. Zur Vermeidung oder Beseitigung solcher für Bilanzmeßsysteme der beschriebenen Art typischen Messfehler wird in der US-B 64 57 372 ferner vorgeschlagen, die Schwingungsamplituden beider unterschiedlich schwingender Meßrohre jeweils separat zu ermitteln und basierend auf den einzeln gemessenen Schwingungsamplituden jedes der Meßrohre eine geeignete Korrektur der gemessenen Phasendifferenzen durchzuführen.

Allerdings führt eine solche, in überwiegendem Maße rechnerbasierte, die von den unterschiedlichen Schwingungsamplituden verursachten Messfehler praktisch erst nachträglich beseitigende Kompensation einerseits zu einem erhöhten technischen Aufwand hinsichtlich der Ausbildung der Erreger- und der Sensoranordnung sowie auch hinsichtlich der Ausbildung der die Messsignale verarbeitenden Messgerät-Elektronik, sowohl bezüglich der Hard- als auch bezüglich der Software. Ferner hat es sich gezeigt, daß die mit den ungleichmäßigen Änderungen der Schwingungseigenschaften der Meßrohre zwangsläufig einhergehenden Imbalancen im Meßaufnehmer zu erheblichen Problemen hinsichtlich der Nullpunkstabilität des Meßaufnehmers führen können, die dann durch Kompensationsmaßnahmen, die sich im wesentlichen auf die Meß-Signalverarbeitung beschränken, kaum mehr zu beherrschen sind.

Ausgehend von den vorgenannten Nachteilen bei Bilanz-Meßsystemen der beschriebenen Art besteht eine Aufgabe der Erfindung darin, ein In-Line-Messgerät mit einem Meßaufnehmer vom Vibrationtyp anzugeben, der einerseits gleichzeitig von zwei Medien durchflossen werden kann, die sich in wenigstens einer physikalischen Eigenschaft, beispielsweise dem Massendurchfluß, der Mediumsdichte und/oder Mediumstemperatur, messbar voneinander unterscheiden, und der andererseits trotzdem eine gute Nullpunktstabilität aufweist.

Zur Lösung dieser Aufgaben ist der Messaufnehmer zum, insb. gleichzeitigen und/oder differentiellen, Messen von in zwei Mediumsleitungen strömenden Medien geeignet. Der Meßaufnehmer umfasst dafür wenigstens vier jeweils ein erstes und ein zweites Ein-/Auslassende aufweisende, im Betrieb zumindest zeitweise, insb. gleichzeitig, vibrierende Meßrohre zum Führen von zu messenden Medien, eine Vibrationen der Meßrohre bewirkende elektro-mechanische, insb. elektro-dynamische, Erregeranordnung, sowie eine zumindest auf örtliche Vibrationen der Meßrohre reagierende Sensoranordnung zum Erzeugen wenigstens eines von Vibrationen der Meßrohre beeinflußten Meßsignals. Dabei ist von den wenigstens vier Meßrohren ein erstes und ein zweites Meßrohr zumindest zeitweise derart in den Verlauf einer ersten Mediumsleitung eingesetzt, daß jedes dieser beiden Meßrohre gleichzeitig jeweils ein Teilvolumen eines durch die erste Mediumsleitung strömenden Mediums führt, und ist von den wenigstens vier Meßrohren ein drittes und ein viertes Meßrohr zumindest zeitweise derart in den Verlauf einer zweiten Mediumsleitung eingesetzt, daß jedes dieser beiden Meßrohre gleichzeitig jeweils ein Teilvolumen eines durch die zweite Mediumsleitung strömenden Mediums führt.

Die Erfindung besteht in einem zum Ermitteln eines Massendurchflusses eines in einer ersten Mediumsleitung strömenden ersten Mediums und eines Massendurchflusses eines in einer zweiten Mediumsleitung strömenden zweiten Mediums und/oder zum Ermitteln einer Bilanz zwischen dem Massendurchfluss des ersten Mediums und dem Massendurchfluss des zweiten Mediums bestehenden Massendurchfluss-Differenz geeigneten In-Line-Meßgerät, das den vorgenannten Meßaufnehmer umfaßt.

Nach einer ersten Ausgestaltung des In-Line-Messgeräts der Erfindung sind das erste Ein-/Auslassende jeweils des ersten und des zweiten Meßrohrs im Betrieb mit einem ersten Verteilerelement sowie das zweite Ein-/ Auslassende jeweils des ersten und des zweiten Meßrohrs im Betrieb mit einem zweiten Verteilerelement verbunden. Gleichermaßen sind auch das erste Ein-/Auslassende jeweils des dritten und des vierten Meßrohrs im Betrieb mit einem dritten Verteilerelement sowie das zweite Ein-/ Auslassende jeweils des dritten und des vierten Meßrohrs im Betrieb mit einem vierten Verteilerelement verbunden. Darüber hinaus sind das erste Verteilerelement an ein Medium dem Meßaufnehmer zuführendes Leitungssegment der ersten Mediumsleitung und das zweite Verteilerelement an ein Medium vom Meßaufnehmer abführendes Leitungssegment der ersten Mediumsleitung angeschlossen, und das dritte Verteilerelement an ein Medium dem Meßaufnehmer zuführendes Leitungssegment der zweiten Mediumsleitung und das vierte Verteilerelement an ein Medium vom Meßaufnehmer abführendes Leitungssegment der zweiten Mediumsleitung angeschlossen.

Nach einer zweiten Ausgestaltung des In-Line-Messgeräts der Erfindung umfasst die Erregeranordnung einen, insb. differentiell wirkenden, elektro-dynamischen Schwingungserreger, der über eine mit dem ersten und/oder dem dritten Meßrohr im wesentlichen starr gekoppelte Erregerspule sowie einen in diese eintauchenden, mit dem zweiten und/oder dem vierten Meßrohr im wesentlichen starr gekoppelten Tauchanker auf die Meßrohre einwirkt.

Nach einer dritten Ausgestaltung des In-Line-Messgeräts der Erfindung ist der Schwingungserreger oberhalb eines gemeinsamen örtlichen Schwerpunkts aller vier Meßrohre angeordnet, der in einer durch die Einbaustelle des Schwingungserregers hindurchgehenden gedachten Querschnittsebene liegt.

Nach einer vierten Ausgestaltung des In-Line-Messgeräts der Erfindung ist der Schwingungserreger so im Meßaufnehmer angeordnet und an den Meßrohren fixiert ist, daß eine durch den Schwingungserreger in die Meßrohre eingeleitete Erregerkraft jeweils im wesentlichen in einem gemeinsamen örtlichen Schwerpunkt des ersten und dritten Meßrohrs und in einem gemeinsamen örtlichen Schwerpunkt des zweiten und vierten Meßrohrs angreift, welche beiden Schwerpunkte in einer durch die Einbaustelle des Schwingungserregers hindurchgehenden gedachten Querschnittsebene liegen.

Nach einer fünften Ausgestaltung des In-Line-Messgeräts der Erfindung ist die Sensoranordnung als eine, insb. differentiell wirkende, elektro-dynamische Sensoranordnung ausgebildet, die wenigstens zwei zu der Erregerspule der Erregeranordnung jeweils im wesentlichen baugleiche Sensorspulen sowie zwei zu dem Tauchanker der Sensoranordnung jeweils im wesentlichen baugleiche Tauchanker umfasst.

Nach einer sechsten Ausgestaltung des In-Line-Messgeräts der Erfindung umfasst die Sensoranordnung genau zwei Sensorspulen sowie genau zwei zu dem Täuchanker.

Nach einer siebenten Ausgestaltung der Erfindung umfasst der Meßaufnehmer ferner ein erstes Tragsystem zum schwingfähigen Haltern der Meßrohre, wobei das erste Tragsystem an wenigstens einem ersten Ein-/Auslaßende eines der vier Meßrohre und an wenigstens einem zweiten Ein-/Auslaßende eines der vier Meßrohre fixiert ist.

Nach einer achten Ausgestaltung des In-Line-Messgeräts der Erfindung ist das erste Tragsystem am ersten und am zweiten Ein-/Auslaßende von wenigstens zwei der vier, insb. von jedem der vier, Meßrohre fixiert.

Nach einer neunten Ausgestaltung des In-Line-Messgeräts der Erfindung sind die Meßrohre so geformt und im Meßaufnehmer angeordnet, daß ein minimaler seitlicher Abstand zwischen dem ersten und dem zweiten Meßrohr wesentlich größer ist als ein maximaler seitlicher Abstand zwischen dem ersten und dem dritten Meßrohr und/oder als ein maximaler seitlicher Abstand zwischen dem zweiten und dem vierten Meßrohr.

Nach einer zehnten Ausgestaltung des In-Line-Messgeräts der Erfindung sind die Meßrohre so geformt und im Meßaufnehmer angeordnet, daß sie zumindest abschnittsweise zueinander im wesentlichen parallel verlaufen.

Nach einer elften Ausgestaltung der Erfindung sind die Meßrohre so geformt und Meßaufnehmer angeordnet, daß das erste und das dritte Meßrohr einander zumindest abschnittsweise berühren und daß das zweite und das vierte Meßrohr einander zumindest abschnittsweise berühren.

Nach einer zwölften Ausgestaltung des In-Line-Messgeräts der Erfindung sind das erste und das dritte Meßrohr zur Bildung eines ersten Meßrohr-Verbundes jeweils von ihren ersten und zweiten Ein-/Auslaßenden entfernt zumindest punktuell miteinander im wesentlichen starr gekoppelt und sind das zweite und das vierte Meßrohr zur Bildung eines zweiten Meßrohr-Verbundes jeweils von ihren ersten und zweiten Ein-/ Auslaßenden entfernt zumindest punktuell miteinander im wesentlichen starr gekoppelt.

Nach einer dreizehnten Ausgestaltung des In-Line-Messgeräts der Erfindung sind das erste und das dritte Meßrohr, jeweils von ihren ersten und zweiten Ein-/Auslaßenden entfernt zumindest abschnittsweise miteinander im wesentlichen starr gekoppelt und sind das zweite und das vierte Meßrohr jeweils von ihren ersten und zweiten
Ein-/Auslaßenden entfernt zumindest abschnittsweise flächig miteinander im wesentlichen starr gekoppelt.

Nach einer vierzehnten Ausgestaltung des In-Line-Messgeräts der Erfindung sind das erste und das dritte Meßrohr jeweils von ihren ersten und zweiten Ein-/Auslaßenden entfernt unter Bildung einer Verbindungsnaht miteinander verlötet, insb. hartverlötet, und/oder verschweißt und sind das zweite und das vierte Meßrohr jeweils von ihren ersten und zweiten Ein-/Auslaßenden entfernt unter Bildung einer Verbindungsnaht miteinander verlötet, insb. hartverlötet, und/oder verschweißt.

Nach einer fünfzehnten Ausgestaltung des In-Line-Messgeräts der Erfindung weisen ein durch das erste und das dritte Meßrohr gebildetes erstes Schwingungssystem und ein durch das zweite und das vierte Meßrohr gebildetes zweites Schwingungssystem im wesentlichen gleiche Eigenfrequenzen auf.

Nach einer sechzehnten Ausgestaltung des In-Line-Messgeräts der Erfindung schwingen die Meßrohre im Betrieb mit im wesentlichen gleicher Schwingungsfrequenz, insb. auf einer natürlichen Eigenfrequenz des ersten und des zweiten Schwingungssystem.

Nach einer siebzehnten Ausgestaltung des In-Line-Messgeräts der Erfindung schwingen das erste und das zweite Meßrohr zumindest zeitweise zueinander im wesentlichen gegenphasig und schwingen das dritte und das vierte Meßrohr zumindest zeitweise zueinander im wesentlichen gegenphasig.

Nach einer achtzehnten Ausgestaltung des In-Line-Messgeräts der Erfindung sind die von den Meßrohren im Betrieb ausgeführten Vibrationen zumindest zeitweise als Biegeschwingungen um jeweils eine das erste und das jeweils zugehörige zweite Ein-/ Auslassende imaginär verbindende Achse oder eine zu dieser parallele gedachte Achse ausgebildet.

Nach einer neunzehnten Ausgestaltung des In-Line-Messgeräts der Erfindung weist jedes der vier Meßrohre eine sein jeweiliges erstes
Ein-/Auslassende und sein jeweiliges zweites Ein-/Auslassende imaginär verbindende Mittellinie auf.

Nach einer zwanzigsten Ausgestaltung des In-Line-Messgeräts der Erfindung sind die Meßrohre so geformt und im Meßaufnehmer angeordnet, daß mindestens zwei der vier gedachten Mittellinien in einer gemeinsamen gedachten, insb. ebene, Schnittflächen des Meßaufnehmers verlaufen.

Nach einer einundzwanzigsten Ausgestaltung des In-Line-Messgeräts der Erfindung sind die Meßrohre so geformt und im Meßaufnehmer angeordnet, daß die vier gedachten Mittellinien auf zwei gedachte, zueinander im wesentlichen parallele, insb. ebene, Schnittflächen des Meßaufnehmers verteilt sind.

Nach einer zweiundzwanzigsten Ausgestaltung des In-Line-Messgeräts der Erfindung sind die Meßrohre so geformt und im Meßaufnehmer angeordnet, daß die vier gedachten Mittellinien auf vier gedachte, zueinander im wesentlichen parallele, insb. ebene, Schnittflächen des Meßaufnehmers verteilt sind.

Nach einer dreiundzwanzigsten Ausgestaltung des In-Line-Messgeräts der Erfindung sind die Meßrohre so geformt und im Meßaufnehmer angeordnet, daß alle vier gedachten Mittellinien in einer gemeinsamen gedachten, insb. ebene, Schnittflächen des Meßaufnehmers verlaufen.

Nach einer vierundzwanzigsten Ausgestaltung des In-Line-Messgeräts der Erfindung sind die vier Meßrohre im wesentlichen gerade.

Nach einer fünfundzwanzigsten Ausgestaltung des In-Line-Messgeräts der Erfindung sind die vier Meßrohre im wesentlichen gleichermaßen, insb. V- oder U-förmig, gekrümmt.

Nach einer sechsundzwanzigsten Ausgestaltung des In-Line-Messgeräts der Erfindung sind die vier Meßrohre im wesentlichen V-förmig gekrümmt.

Nach einer siebenundzwanzigsten Ausgestaltung des In-Line-Messgeräts der Erfindung sind die vier Meßrohre im wesentlichen identisch geformt.

Nach einer achtundzwanzigsten Ausgestaltung des In-Line-Messgeräts der Erfindung weisen die im ersten und zweiten Meßrohr geführten Teilvolumina vom in der ersten Mediumsleitung strömenden Medium eine gemeinsame Strömungsrichtung auf, die zumindest zeitweise einer gemeinsamen Strömungsrichtung der im dritten und vierten Meßrohr geführten Teilvolumina vom in der zweiten Mediumsleitung strömenden Medium entgegengerichtet ist.

Nach einer neunundzwanzigsten Ausgestaltung des In-Line-Messgeräts der Erfindung weisen die im ersten und zweiten Meßrohr geführten Teilvolumina vom in der ersten Mediumsleitung strömenden Medium eine gemeinsame Strömungsrichtung auf, die zumindest zeitweise zu einer gemeinsamen Strömungsrichtung der im dritten und vierten Meßrohr geführten Teilvolumina vom in der zweiten Mediumsleitung strömenden Medium gleichgerichtet ist.

Nach einer dreißigsten Ausgestaltung des In-Line-Messgeräts der Erfindung ist das erste Tragsystem von einem äußeren, insb. den Meßaufnehmer einhausenden, zweiten Tragsystem und/oder von wenigstens einer der angeschlossenen Mediumsleitungen, insb. schwingfähig, gehaltert.

Nach einer einunddreißigsten Ausgestaltung des In-Line-Messgeräts der Erfindung weist der Meßaufnehmer wenigstens einen mit wenigstens einem der Meßrohre thermisch gekoppelten und auf Änderungen von dessen Meßrohr-Temperatur reagierenden Temperatursensor auf.

Ein Grundgedanke der Erfindung besteht darin, einerseits das sich in den Meßrohren momentan befindende erste Medium sowie das sich in den Meßrohren momentan befindende zweite Medium jeweils in im wesentlichen gleichgroße Teilvolumina aufzusplitten, und andererseits die beiden Teilvolumen des ersten Mediums wie auch die beiden Teilvolumen des zweiten Mediums jeweils für sich genommen symmetrisch bezüglich einer gedachten Schwere- oder Mittellinie des Meßaufnehmers anzuordnen. Anders gesagt geht es darum, den Massenstrom des zu messende ersten Mediums und den Massenstrom des zu messenden zweiten Mediums jeweils in zwei im wesentlichen gleich große Teilströme aufzuteilen und die Teilströme so durch den Meßaufnehmer zu leiten, daß auch bei Medien mit voneinander abweichenden physikalischen Eigenschaften bezüglich der vorgenannten Mittellinie eine im wesentlichen symmetrisch Verteilung der betreffenden physikalischen Eigenschaften, wie z.B. Massendurchfluß, Dichte, Viskosität, Temperatur etc., erhalten bleibt.

Ein Vorteil des erfindungsgemäßen In-Line-Messgeräts ist u.a. darin zu sehen, daß trotzdem er vergleichsweise kostengünstig gefertigt werden kann, eine sehr hohe Messgenauigkeit, insb. auch eine sehr hohe Nullpunkstabilität, aufweist.

Die Erfindung und weitere vorteilhafte Ausgestaltung werden nun anhand der Figuren der Zeichnung näher erläutert, in der mehrere Varianten des erfindungsgemäßen In-Line-Messgeräts dargestellt sind. Funktionsgleiche Teile sind in den einzelnen Figuren mit denselben Bezugszeichen versehen, jedoch in nachfolgenden Figuren nur dann wiederholt, wenn es sinnvoll erscheint.
Fig. 1 zeigt perspektivisch ein In-Line-Meßgerät mit einem Meßaufnehmer vom Vibrationstyp zum Messen von in zwei Mediumsleitungen in geführten Medien,
Fig. 2 zeigt perspektivisch mechanische Einzelheiten einer ersten Variante eines für ein In-Line-Meßgerät nach Fig. 1 geeigneten Meßaufnehmers vom Vibrationstyp ohne vervollständigtes Gehäuse,
Fig. 3 zeigt eine Vorderansicht des Meßaufnehmers entsprechend Fig. 2, wieder ohne vervollständigtes Gehäuse, jedoch mit zusätzlichen elektrischen Einzelheiten,
Fig. 4 zeigt den Meßaufnehmer entsprechend Fig. 2 im Schnitt entlang der Linie A-A von Fig. 3 eine Unteransicht von Fig. 2, nun jedoch mit vervollständigtem Gehäuse,
Fig. 5 zeigt den Meßaufnehmer entsprechend Fig. 2 im Schnitt entlang der Linie B-B von Fig. 3 eine Seitenansicht von Fig. 2, wieder mit vervollständigtem Gehäuse,
Fig. 6 zeigt einen im Vergleich zum Meßaufnehmer von Fig. 2 lediglich hinsichtlich seiner Verbindungsvorrichtungen für Mediumsleitungen modifizierten Meßaufnehmer in einer Schnittansicht,
Fig. 7 zeigt in einer ersten Perspektivansicht mechanische Einzelheiten einer zweiten Variante eines für ein In-Line-Meßgerät nach Fig. 1 geeigneten Meßaufnehmers vom Vibrationstyp,
Fig. 8 zeigt in einer zweiten Perspektivansicht den Meßaufnehmer entsprechend Fig. 7 und
Fig. 9 zeigt perspektivisch mechanische Einzelheiten einer dritten Variante eines für ein In-Line-Meßgerät nach Fig. 1 geeigneten Meßaufnehmers vom Vibrationstyp.

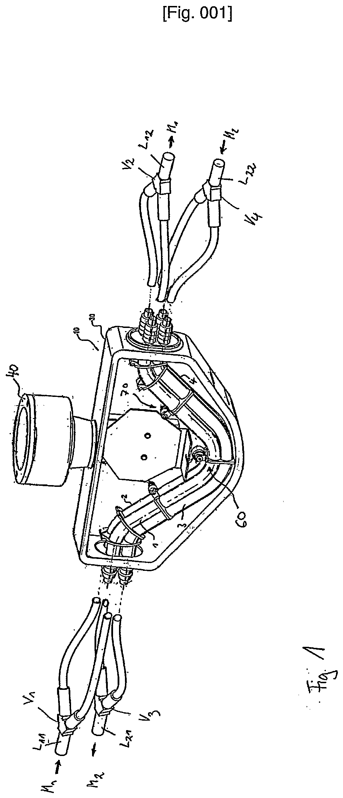

In Fig. 1 ist ein In-Line-Meßgerät zum, insb. gleichzeitigen, Messen zweier voneinander getrennt geführter Medien dargestellt. Das In-Line-Meßgerät umfaßt dafür einen in einem, insb. als Aufnehmer-Gehäuse ausgebildeten, ersten Tragsystem 30 untergebrachten physikalisch-elektrischen Meßaufnehmer. Weiters umfasst das In-Line-Meßgerät eine, insb. eine in einem Elektronik-Gehäuse 40 untergebrachte, mit dem Meßaufnehmer 10 elektrisch verbundene Meß- und Betriebs-Elektronik. Das In-Line-Meßgerät dient im besonderen dazu, eine Bilanz zwischen einem in einer ersten Mediumsleitung mindestens temporär strömenden ersten Mediums M₁ sowie einem in einer zweiten Mediumsleitung mindestens temporär strömenden zweiten Mediums M₂, insb. eine Differenz zwischen und/oder eine Summe von den Massendurchflüssen der beiden Medien oder auch eine mittlere Dichte und/oder Viskosität beider Medien etc., zu ermitteln. Bei dem Medium M₁ kann es sich beispielsweise um ein einem Behälter oder einem Reaktor zugeführtes Medium, beispielsweise ein Fluid, eine Paste und/oder ein Pulver, handeln, während das zweite Medium M₂beispielsweise ein demselben Behälter oder Reaktor entnommenes Fluid sein kann. Es sei an dieser Stelle ferner erwähnt, daß es sich bei den beiden Medien M₁, M₂ sowohl um chemisch im wesentlichen identische als auch um chemisch voneinander verschiedene Medien handeln kann. Gleichermaßen können die beiden Medien auch hinsichtlich ihres momentanen physikalischen Zustands, beispielsweise ihrer jeweiligen Strömungsgeschwindigkeit, ihrer jeweiligen Reynoldszahl oder hinsichtlich eines jeweiligen Druckes etc., und/oder hinsichtlich ihrer momentanen physikalischen Eigenschaften, beispielsweise der jeweiligen Dichte, der jeweiligen Viskosität oder der jeweiligen Temperatur etc., gleich oder auch voneinander verschieden ausgebildet sein.

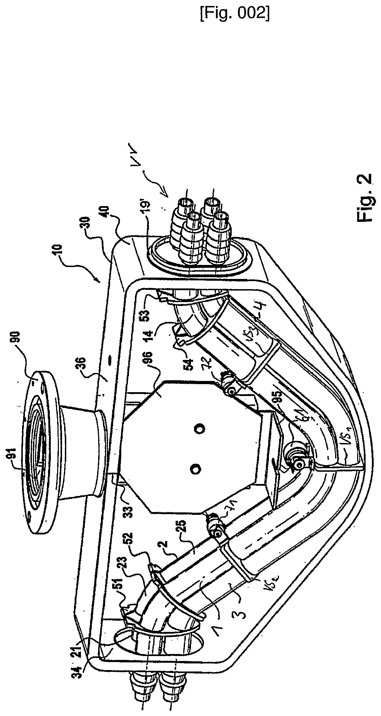

Bei dem für die Bilanzmessung verwendeten Meßaufnehmer 10 handelt es sich um einen Messwandler vom Vibrationstyp, von dem einzelne Ausgestaltungsvarianten in den Fig. 2 bis 9 gezeigt sind. Derartige Meßwandler dienen, wie eingangs bereits erwähnt, dazu, in einem Medium, das durch vibrierende, insb. biegeschwingende, Meßrohre hindurchströmen gelassen wird, mechanische Reaktionskräfte, z.B. massendurchflußabhängige Coriolis-Kräfte, dichteabhängige Trägheitkräfte und/oder viskositätsabhängige Reibungskräfte, zu erzeugen, die sensorisch erfassbar und insoweit meßbar auf das jeweilige Meßrohr und die von diesem ausgeführten Schwingungen zurückwirken. Abgeleitet von solchen zumeist durch definiert angeregte Nutzschwingungen der Meßrohre erzeugte und zumindest indirekt über Veränderungen von Schwingungsamplituden, Schwingungsfrequenzen und/oder Phasenlagen messbare Reaktionskräften können so in dem Fachmann an und für sich bekannter Weise z.B. ein Massedurchfluß, eine Dichte und/oder eine Viskosität des im jeweiligen Meßrohr strömenden Mediums ermittelt werden.

Wie in Fig. 2 dargestellt, umfaßt der Meßaufnehmer 10 dafür ein erstes Meßrohr 1 und ein zweites Meßrohr 2, welche beiden Meßrohre 1, 2 dazu dienen, das erste Medium M₁ zu führen, sowie ein drittes Meßrohr 3 und eine viertes Meßrohr 4, welche beiden Meßrohre 3, 4 dazu dienen, jeweils das zweite Medium M₂ zu führen. Im Betrieb des Meßaufnehmers sind das erste und das zweite Meßrohr 1 dementsprechend jeweils einlaßseitig mit einem Medium dem Meßaufnehmer zuführenden ersten Leitungssegment L₁₁ und jeweils auslaßseitg mit einem Medium vom Meßaufnehmer abführenden zweiten Leitungssegment L₁₂ der ersten Mediumsleitung verbunden. Gleichermaßen sind das dritte Meßrohr 3 und das vierte Meßrohr 4 für die Messung jeweils einlaßseitig an ein Medium dem Meßaufnehmer zuführendes erstes Leitungssegment L₂₁ und jeweils auslaßseitg an ein Medium vom Meßaufnehmer abführendes zweites Leitungssegment L₂₂ der zweiten Mediumsleitung angeschlossen.

Nach einer Ausgestaltung der Erfindung münden, wie auch in der in der Fig. 2 angedeutet, ein erstes Ein-/Auslassende des ersten Meßrohrs 1 und ein erstes Ein-/ Auslassende des zweiten Meßrohrs 2 im Betrieb jeweils in ein erstes Verteilerelement V₁ sowie ein zweites Ein-/ Auslassende des ersten Meßrohrs 1 und ein zweites Ein=/ Auslassende des zweiten Meßrohrs 2 im Betrieb jeweils in ein zweites Verteilerelement V₂ ein. Ferner sind das erste Verteilerelement V₁ zumindest zeitweise mit dem ersten Leitungssegment L₁₁ der ersten Mediumsleitung und das zweite Verteilerelement V₂ zumindest zeitweise mit dem zweiten Leitungssegment L₁₂ der ersten Mediumsleitung L₁ verbunden. Die beiden Meßrohre 1, 2, die Verteilerelemente und die beiden Leitungssegmente L₁₁, L₁₂ der ersten Mediumsleitung sind also so miteinander verbunden, daß die beiden Meßrohre 1, 2 im Betrieb parallel von zwei möglichst gleich großen Teilströmen des ersten Mediums durchflossen sind, oder anders gesagt, daß jedes dieser beiden Meßrohre 1, 2 gleichzeitig jeweils ein Teilvolumen vom in der ersten Mediumsleitung strömenden Mediums M₁ führt. In dazu analoger Weise münden ein erstes Ein-/Auslassende des dritten Meßrohrs 3 und ein erstes Ein-/ Auslassende des vierten Meßrohrs 4 im Betrieb jeweils in ein drittes Verteilerelement V₃ sowie ein zweites Ein-/ Auslassende des dritten Meßrohrs 3 und ein zweites Ein-/ Auslassende des vierten Meßrohrs 4 im Betrieb jeweils in ein viertes Verteilerelement V₄ ein. Des weiteren sind auch das dritte Verteilerelement V₃ zumindest zeitweise mit dem ersten Leitungssegment L₂₁ der zweiten Mediumsleitung und das vierte Verteilerelement V₄ zumindest zeitweise mit dem zweiten Leitungssegment L₂₂ zweiten Mediumsleitung verbunden. Im Betrieb des Meßaufnehmers führt somit zumindest zeitweise jedes dieser beiden Meßrohre 3, 4 gleichzeitig jeweils ein Teilvolumen vom in der zweiten Mediumsleitung strömenden Mediums M₂.

Wie sich aus der vorangehenden Beschreibung unschwer erkennen lässt, kann das in den beiden Meßrohren 1, 2 strömende erste Medium M₁ im Betrieb des In-Line-Meßgeräts praktisch in beliebiger, insb. auch in vom in den Meßrohren 3, 4 strömenden zweiten Medium M₂ unabhängier Weise, strömen gelassen werden. Dementsprechend können im besonderen auch die Massendurchflüsse der beiden Medien M₁, M₂ voneinander auch verschieden ausgebildet sein, insb. kann das Medium M₁ im ersten und zweiten Meßrohr 1, 2 diese z.B. jeweils auch in einer gemeinsamen Strömungsrichtung passieren, die, wie in Fig. 1 angedeutet, einer momentane gemeinsamen Strömungsrichtung des Mediums M₂ im dritten und vierten Meßrohr 3, 4 entgegengerichtet ist. Gleichwohl kann aber auch der Massendurchfluss einer der beiden Medien M₁, M₂ praktisch Null sein, während der Massendurchfluß des entsprechend anderen der beiden Medien M₁ bzw. M₂ von Null verschieden ist, Darüberhinaus ist auch möglich, die beiden Medien M1, M2, beispielsweise zum Zwecke der direkten Messung eines Gesamt-Massendurchflusses beider Medien M₁, M₂, mit derselben Strömungsrichtung durch die Meßrohre hindurchströmen zu lassen.

Die Meßrohre des Meßaufnehmers können beispielsweise aus rostfreiem Stahl bestehen, wobei nach einer Ausgestaltung der Erfindung rostfreier Stahl mit der europäischen Werkstoffnummer 1.4539, die der amerikanischen Bezeichnung 904 L entspricht, als Material für die Meßrohre verwendet wird. Allerdings können die Meßrohre auch aus anderen Stählen oder weiteren dem Fachmann geläufigen Materialien, wie z.B. aus Titan, Zirkonium, Tantal oder daraus hergestellten Legierungen dergleichen gefertigt sein. Ferner können auch Kunststoff, Glas, Keramik oder dergleichen als Material für die Meßrohre verwendet werden. Gemäß einer weiteren Ausgestaltung der Erfindung können die, insb. einstückig ausgebildeten, Meßrohre zur Minimierung der Herstellkosten zumindest paarweise im wesentlichen identisch geformt sein. Zudem sind die Meßrohre in vorteilhafter Weise so im Meßaufnehmer angeordnet, daß sie zumindest abschnittsweise, insb. aber über die gesamte Meßrohrlänge, zueinander parallel verlaufen.

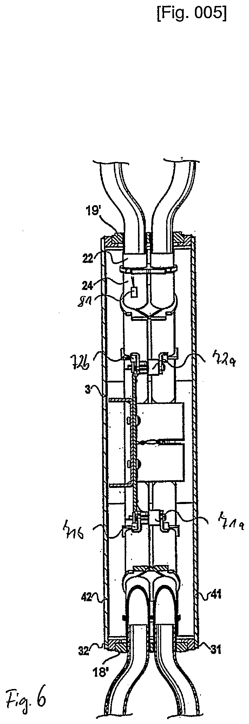

Das erste Meßrohr 1 ist bei der in den Fig. 2 bis 5 gezeigten ersten Variante des Meßaufnehmers 10 im wesentlichen V-förmig, insb. bezüglich einer ersten Symmetrielinie symmetrisch, gebogen. Das hier dementsprechend ebenfalls im wesentlichen V-förmige zweite Meßrohr 2 ist gleichermaßen bezüglich einer zweiten Symmetrielinie symmetrisch gebogen. Ebenso sind auch die parallel zu den beiden Meßrohren verlaufenden Meßrohre 3, 4 jeweils im wesentlichen V-förmig und symmetrisch gebogen. Anders gesagt weist jedes der Meßrohre zumindest eine darin zentral verlaufende, sein jeweiliges erstes
Ein-/Auslassende und sein jeweiliges zweites Ein-/Auslassende imaginär verbindende Mittellinie auf, die im wesentlichen eine V-Form beschreibt. Ein Vorteil von im wesentlichen V-förmig gekrümmten Meßrohren besteht neben ihrer einfachen Herstellbarkeit u.a. auch darin, daß sie eine vergleichsweise hohe Stabilität gegen allfällig in Strömungsrichtung wirkende Verformungskräfte aufweisen. Es sei jedoch bereits an dieser Stelle erwähnt, daß anstelle der in der ersten und zweiten Variante exemplarisch gezeigten V-förmig gebogenen Meßrohre 1, 2, 3, 4 auch andere Rohrformen gewählt werden können. Beipielsweise haben sich bei Meßaufnehmern vom Vibrationstyp auch in einer Rohrebene U-förmig,
Q-förmig oder Triangel-förmig gekrümmte Meßrohre besonders bewährt. Weitere für die vier Meßrohre prinzipiell geeignete Rohrformen können zudem auch der US-B 67 11 958, der US-B 64 57 372, der US-A 64 50 042, der US-A 57 96 011, der US-A 53 01 557, der US-A 48 76 898 oder der US-A 48 95 031 entnommen werden. Gleichwohl können die vier Meßrohre aber auch, wie auch in der eine dritte Variante des Meßaufnehmers zeigenden Fig. 6 dargestellt, im wesentlichen gerade geformt sein.

Wie aus der Fig. 2 ohne weiteres ersichtlich, hat das Meßrohr 1 bei der ersten Variante des Meßaufnehmers ein im wesentlichen gerades erstes Ein-/ Auslaßsegment 11 und ein gerades zweites Ein-/Auslaßsegment 12. Ferner weist das Meßrohr 1 einen mit dem Ein-/Auslaß-Rohrsegment 11 verbundenes erstes Ein-/ Auslaß-Bogensegment 13, ein mit dem zweiten Ein-/Auslaß-Rohrsegment 12 verbundenes zweites Ein-/Auslaß-Bogensegment 14, ein mit dem ersten Ein-/ Auslaß-Bogensegment 13 verbundenes im wesentlichen gerades erstes Mittelrohrsegment 15, ein mit dem zweites Ein-/Auslaß-Bogensegment 14 verbundenes, im wesentlichen gerades zweites Mittelrohrsegment 16 und einen mit den Mittelrohrsegmenten 15, 16 verbundenes Scheitel-Bogensegment 17. Das Meßrohr 2 ist, wie bereits angedeutet, im wesentlichen identisch zum Meßrohr 1 ausgebildet, d.h. es weist ebenfalls ein gerades erstes Ein-/Auslaß-Rohrsegment 21, ein gerades zweites Ein-/ Auslaß-Rohrsegment 22, einen mit dem
Ein-/Auslaß-Rohrsegment 21 verbundenes erstes Ein-/ Auslaß-Bogensegment 23, ein mit dem zweiten Ein-/Auslaß-Rohrsegment 22 verbundenes zweites Ein-/Auslaß-Bogensegment 24, ein mit dem ersten Ein-/ Auslaß-Bogensegment 23 verbundenes im wesentlichen gerades erstes Mittelrohrsegment 25, ein mit dem zweites Ein-/Auslaß-Bogensegment 24 verbundenes, im wesentlichen gerades zweites Mittelrohrsegment 26 und einen mit den beiden Mittelrohrsegmenten 25, 26 verbundenes Scheitel-Bogensegment 27. Eine mit den beiden Ein-/ Auslaßsegmenten 21, 22 fluchtende gedachte Ein-/Auslaßachse A₂ des zweiten Meßrohrs 2 verläuft zudem im wesentlichen parallel zu einer gedachten Ein-/ Auslaßachse A₁ des ersten Meßrohrs 1, die dessen beide Ein-/ Auslaßsegmente 11, 12 imaginär verbindet. In dazu analoger Weise sind auch das dritte Meßrohr 3 durch ein gerades erstes Ein-/ Auslaß-Rohrsegment 31, ein gerades zweites Ein-/ Auslaß-Rohrsegment 32, einen mit dem Ein-/ Auslaß-Rohrsegment 31 verbundenes erstes Ein-/ Auslaß-Bogensegment 33, ein mit dem zweiten Ein-/Auslaß-Rohrsegment 32 verbundenes zweites
Ein-/Auslaß-Bogensegment,34, ein mit dem ersten Ein-/ Auslaß-Bogensegment 33 verbundenes im wesentlichen gerades erstes Mittelrohrsegment 35, ein mit dem zweites Ein-/Auslaß-Bogensegment 34 verbundenes, im wesentlichen gerades zweites Mittelrohrsegment 36 und einen mit den beiden Mittelrohrsegmenten 35, 36 verbundenes Scheitel-Bogensegment 37 und das vierte Meßrohr 4 durch ein gerades erstes Ein-/Auslaß-Rohrsegment 41, ein gerades zweites Ein-/ Auslaß-Rohrsegment 42, einen mit dem Ein-/Auslaß-Rohrsegment 41 verbundenes erstes Ein-/ Auslaß-Bogensegment 43, ein mit dem zweiten Ein-/Auslaß-Rohrsegment 42 verbundenes zweites Ein-/Auslaß-Bogensegment 44, ein mit dem ersten Ein-/Auslaß-Bogensegment 43 verbundenes im wesentlichen gerades erstes Mittelrohrsegment 45, ein mit dem zweites Ein-/Auslaß-Bogensegment 44 verbundenes, im wesentlichen gerades zweites Mittelrohrsegment 46 und einen mit den beiden Mittelrohrsegmenten 45, 46 verbundenes Scheitel-Bogensegment 47 gebildet. Im in Fig. 2 gezeigten Ausführungsbeispiel sind die Ein-/Auslaß-Bogensegmente 13, 14, 23, 24 wie auch die Scheitelbögen 17, 27 im wesentlichen kreisbogenförmig ausgebildet.

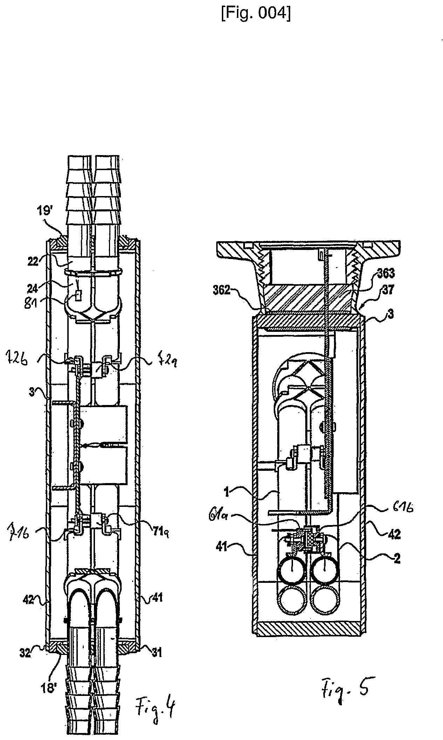

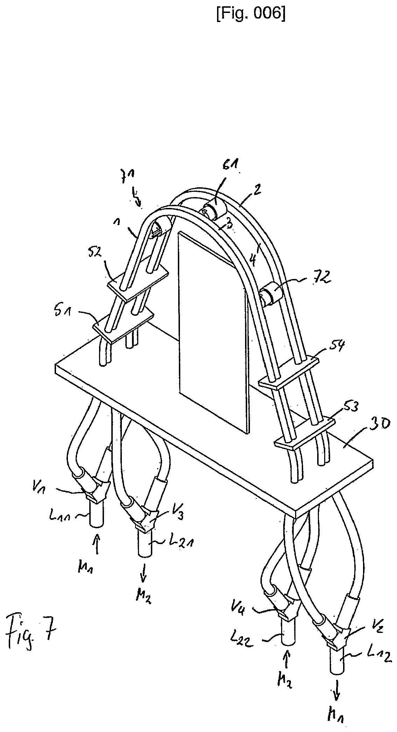

Wie in den Fig. 2 bis 6 gezeigt, sind die Ein-/Auslaß-Rohrsegmente 11, 12, 21, 22, 31, 32, 41, 42 der Meßrohre ferner jeweils endseits in einem als weitgehend biege- und verwindunsgsteifes Tragsystem 30 dienenden Rahmen des Meßaufnehmers so angeordnet und fixiert, daß letztere in ausreichendem Maße schwingfähig darin gehaltert sind. Das Tragsystem 30 der ersten Variante des Meßaufnehmers ist, wie aus der Zusammenschau von Fig. 1 und Fig. 4 ohne weiteres ersichtlich, praktisch in das Aufnehmer-Gehäuse integriert, während es in der zweiten und dritten Variante des Meßaufnehmers jeweils als eher massive Grund- oder Trägerplatte ausgebildet ist. Wie in den Fig. 2 oder 6 dargestellt, können dabei die beiden Ein-/ Auslaßsegmente 11, 12, 21, 22, 31, 32 bzw. 41, 42 jedes der Meßrohre 1, 2, 3, 4 beispielsweise jeweils zueinander fluchtend ausgerichtet sein. Allerdings besteht auch die Möglichkeit, die vier Meßrohre so auszubilden und zueinander auszurichten, daß jedes der entsprechenden Ein-/ Auslaßsegmente das Tragsystem 30 praktisch auf ein und derselben Seite durchstoßen, vgl. hierzu auch Fig. 6 und 7.

Zum Einsetzen des Meßaufnehmers 10 in die Mediumsleitungen sind in Verlängerung der jeweiligen Ein-/ Auslaß-Rohrsegmente 11, 12, 21, 22 der Meßrohre 1, 2, 3, 4 jeweils Verbindungsvorrichtungen VV angebracht, wie z.B. Stutzen mit einem Aussen- oder mit einem Innengewinde, Flansche oder Klemmvorrichtungen, wie sie z.B. unter der eingetragenen Marke Triclamp handelsüblich sind. Für den Fall, daß die mit dem Meßrohr 1 und/oder mit dem Meßrohr 2 zu verbindenden Leitungssegmente Schlauchleitungen sind, können die Verbindungsvorrichtungen ferner, wie auch in der Fig. 1, 2, 3 und 4 jeweils dargestellt, in entsprechender Weise als Schlauchtülle ausgebildet sein, auf die das jeweils zugehörige Leitungssegment L₁₁, L₁₂, L₂₁ oder L₂₂ der jeweils zugehörigen Mediumsleitung aufgeschoben werden kann. Des weiteren können die Verbindungsvorrichtungen mit etwa gleich bleibendem zu dem jeweils zugehörigen Meßrohr im wesentlichen fluchtend ausgerichtet sein oder aber auch, wie in Fig. 6 angedeutet, mit im Vergleich zu den Abständen zwischen den Meßrohren größeren gegenseitigen Abständen vom Meßaufnehmer wegführen.

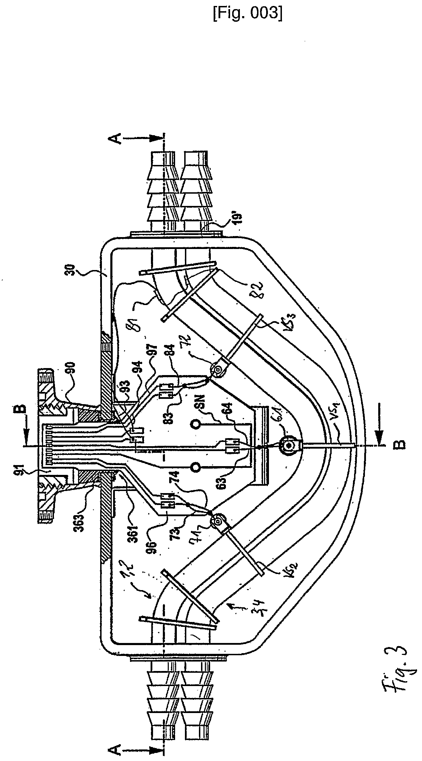

Das Tragsystem 30 der ersten Variante des Meßaufnehmers umfasst ein vergleichsweise flaches, ebenes erstes Ein-/Auslaß-Rahmensegment 31, ein gleichermaßen flach und eben ausgebildetes zweites Ein-/ Auslaß-Rahmensegment 35 sowie ein die Ein-/Auslaß-Rahmensegmente 31, 32 verbindendes, Durchführungs-Rahmensegment 33, in dem eine elektrische Durchführung 34 (nur in Fig. 4 zu sehen) druckdicht fixiert ist. Das im gezeigten Ausführungsbeispiel ebenfalls flach und ebene ausgebildete Durchführungs-Rahmensegment 33 bildet mit dem ersten und dem zweiten Ein-/Auslaß-Rahmensegment 31, 32 jeweils einen rechten Winkel. Das Tragsystem 30 umfasst in der ersten Variante ferner ein ebenes erstes Ansatz-Rahmensegment 34, das an das erste Ein-/ Auslaß-Rahmensegment 31 unter einem Winkel angesetzt ist, der grösser als 90° ist - im Ausführungsbeispiel sind das etwa 120°. Das Tragsystem 30 umfasst schließlich ein in das erste Ansatz-Rahmensegment 34 übergehendes, gebogenes Scheitel-Rahmensegment 35 und ein an das zweite Ein-/ Auslaß-Rahmensegment 32 unter dem genannten Winkel angesetztes, ebenfalls in das Scheitel-Rahmensegment 35 übergehendes, ebenes zweites Ansatz-Rahmensegment 36. Ebenso wie die Meßrohre 1, 2, 3, 4 kann das Tragsystem 30 einstückig ausgebildet sein und beispielsweise aus einem eine Vorderfläche 301 und eine Hinterfläche 302 (nur in Fig. 3 zu sehen) aufweisenden Flach-Edelstahl von konstanter Breite und Dicke durch entsprechendes Biegen und Verschweissen der Enden, vgl. die Naht 303, hergestellt werden.

Zur Fixierung der Meßrohre 1, 2, 3, 4 im für die erste Variante des Meßaufnehmers im wesentlichen kasten- oder rahmenförmig ausgebildeten Tragsystem 30 dienen im gezeigten Ausführungsbeispiel ein, insb. plattenförmiges oder membranartiges, erstes Fixierelement, beispielsweise aus Stahl, das sowohl mit wenigstens einem der ersten Ein-/ Auslaßsegmente 11, 21, 31, 41 als auch mit dem ersten
Ein-/Auslaß-Rahmensegment 31 mechanisch verbunden, insb. verschweißt oder verlötet, ist sowie ein, insb. membranartiges, zweites Fixierelement, das sowohl mit wenigstens einem der zweiten
Ein-/Auslaßsegmente 12, 22, 32, 42 als auch mit dem zweiten
Ein-/Auslaß-Rahmensegment 32 mechanisch verbunden, insb. verschweißt oder verlötet, ist. Im in den Fig. 2 und 3 gezeigten Ausführungsbeispiel ist das erste Fixierelement plattenförmig ausgebildet und zum einen auf die jeweiligen ersten Ein-/Auslaßsegmente 11, 21, 31, 41 der Meßrohre 1, 2, 3, 4 aufgeschoben und mit wenigstens einem der Ein-/ Auslaßsegmente 11, 21, 31, 41 mechanisch verbunden, und zum anderen eine Montageöffnung im ersten Ein-/ Auslaß-Rahmensegment 31 überdeckend mit letzterem verbunden, insb. verschweißt oder verlötet. In entsprechender Weise können die Meßrohre 1, 2, 3, 4 mittels einer auf die jeweils zweiten Ein-/Auslaßsegmente 12, 22, 32, 42 aufgeschobenen und mit wenigstens einer der beiden mechanisch verbundenen zweiten Fixierplatte am zweiten Ein-/Auslaß-Rahmensegment 32 befestigt sein. Das Tragsystem 30 der ersten Variante kann, wie in Fig. 3 oder 4 schematisch dargestellt, ferner durch eine linke Seitenwand 37 und eine rechte Seitenwand 38 zu einem die Meßrohre umhüllenden, insb. mediumsdichten, Aufnehmer-Gehäuse komplettiert werden. Die beiden Seitenwände 37, 38 sind dabei als im wesentlichen ebene Bleche, z.B. aus rostfreiem Stahl, ausgebildet, die, auf die der Kontur des offenen Rahmens angepaßt und Vorderfläche 301 bzw. die Hinterfläche geschweißt, den offenen Rahmen zum Aufnehmer-Gehäuse ergänzen. Als Stahl für das Tragsystem 30 kann beispielsweise rostfreier Stahl mit der europäischen Werkstoffnummer 1.4301 verwendet werden, die der amerikanischen Bezeichnung 304 entspricht.

Wie bereits eingangs erwähnt, werden beim Meßaufnehmer die für die Messung erforderlichen Reaktionskräfte im jeweils zu messenden Medium durch das Schwingenlassen der Meßrohre bewirkt. Dafür umfaßt der Meßaufnehmer ferner eine auf die Meßrohre 1, 2, 3, 4 einwirkende Erregeranordnung 60, der dazu dient jedes der Meßrohre zumindest innerhalb eines definierten Bereichs betriebsgemäß in für die konkrete Messung jeweils geeignete Nutzschwingungen zu versetzen, der für die Erzeugung und die Erfassung der oben genannten Reaktionskräfte im Fluid ausreichend groß ist. Außerdem weist der Meßaufnehmer eine auf Vibrationen der Meßrohre reagierende Sensoranordnung 70 auf, die dazu dient, wenigstens ein von der zu erfassenden Meßgröße beeinflusstes erstes Schwingungsmeßsignal s₇₁, insb. aber auch ein entsprechendes Schwingungsmeßsignal s₇₂, zu erzeugen.

Zum Antreiben der Meßrohre weist die Erregeranordnung 60 dementsprechend mindestens einen elektro-mechanischen, insb. elektrodynamischen, Schwingungserreger 61 auf. Dieser dient dazu, eine, von einer entsprechenden Meß- und Betriebsschaltung z.B. des oben genannten Coriolis-Massedurchflußmessers eingespeiste, elektrische Erregerleistung P_{exc} in solche, z.B. pulsierenden oder harmonischen, Erregerkräfte F_{exc} umzuwandeln, die symmetrisch, also gleichzeitig, gleichmäßig jedoch gegensinnig, auf Meßrohr 1 und 2 und ggf. auch auf Meßrohr 3 und 4 einwirken und somit die zueinander gegenphasigen Schwingungen der Meßrohre 1, 2 bzw. 3, 4 erzeugen. Die Erregerkräfte F_{exc} können in dem Fachmann an und für sich bekannter Weise z.B. mittels einer in der bereits erwähnten Meß- und Betriebselektronik vorgesehenen Strom- und/ oder Spannungs-Regelschaltung, hinsichtlich ihrer Amplitude und, z.B. mittels einer ebenfalls in Meß- und Betriebselektronik vorgesehenen Phasen-Regelschleife (PLL), hinsichtlich ihrer Frequenz eingestellt werden, vgl. hierzu auch die US-A 48 01 897. Es sei an dieser Stelle noch erwähnt, daß die - hier nicht dargestellte - Meß- und Betriebsschaltung im Elektronik-Gehäuse 40 untergebracht sein kann, das, wie auch in Fig. 1 gezeigt, in der dem Fachmann bekannten Weise beispielsweise praktisch direkt am Meßaufnehmer anmontiert oder ggf. auch von diesem entfernt angeordnet sein kann. Wie in Fig. 2 und 3 exemplarisch dargestellt ist ein erster Teil 61a des Erregers 61 am Scheitel-Bogensegment 17 des Meßrohrs 1 im Bereich von dessen oben erwähnter Symmetrielinie und ein zweiter Teil 61b des Erregers 61 am Scheitel-Bogensegment 27 des Meßrohrs 2 im Bereich von dessen oben erwähnter Symmetrielinie fixiert, vgl. Fig. 4.

Nach einer weiteren Ausgestaltung ist der Erreger 61, wie auch in den in den hier gezeigten Ausführungsbeispielen schematisch dargestellt, ein simultan, insb. differentiell, auf beide Meßrohre 1, 2 wirkender, elektrodynamischer Erreger, worin der erste Teil 61a eine Erregerspule ist und der zweite Teil 61b ein dauermagnetischer Tauchanker ist, die mit der Spulen-Anordnung durch Eintauchen zusammenwirken kann.

Die dem Erfassen von Schwingungen, insb. den Biegeschwingungen, der im Betrieb vibrierenden Meßrohre dienende Sensoranordnung 70 umfaßt beim in Fig. 2 gezeigten Meßaufnehmer einen einlassseitigen, insb. elektro-dynamischen, ersten Schwingungssensor 71 und einen auslassseitigen, insb. elektro-dynamischen, zweiten Schwingungssensor 72, welche beiden Schwingungssensoren 71, 72 auf Bewegungen der Meßrohre 1, 2, insb. deren laterale Auslenkungen und/oder Verformungen, reagierend, das erste bzw. zweite Schwingungssignal s₇₁, s₇₂ entsprechend liefern. Die Schwingungssensoren 71, 72 sind dabei im wesentlichen symmetrisch bezüglich der oben genannten Symmetrielinien der Meßrohre 1, 2 daran fixiert. Zudem sind die beiden Schwingungssensoren 71, 72 bevorzugt baugleich. Überdies können sie auch im wesentlichen baugleich zum Schwingungserreger 61 ausgebildet sein. Im in der Fig. 2 und 3 gezeigten Ausführungsbeispiel sind ein erster Teil 71a des Schwingungssensors 71 am Mittelrohrsegment 15 des Meßrohrs 1 und ein zweiter Teil 71b am Mittelrohrsegment 25 des Meßrohrs 1 fixiert, vgl. Fig. 3. Ein erster Teil 72a des Schwingungssensors 72 ist am Mittelrohrsegment 16 des Meßrohrs 2 und ein zweiter Teil 72b ist am Mittelrohrsegment 26 des Meßrohrs 2 fixiert, vgl. Fig. 3. Gemäß einer Ausgestaltung des Meßaufnehmers sind die Schwingungssensoren 71, 72 differentiell wirkende, also eine Weg- oder Geschwindigkeitsdifferenz zwischen beiden Meßrohren direkt erfassende, elektrodynamische Geschwindigkeitssensoren, d.h. die Teile 71a, 72a sind jeweils eine Erregerspule und die Teile 71b, 72b sind jeweils dauermagnetische Tauchanker, die in die zugehörige Erregerspule jeweils eintauchen können. Als Schwingungssensoren 71, 72 können aber beispielsweise auch Weg- oder Beschleunigungssensor verwendet werden.

Bei den hier gezeigten gezeigten Meßaufnehmern entsprechen somit die von der Sensoranordnung 70 gelieferten Meßsignale den beiden Schwingungssignalen s₇₁ , s₇₂, wobei eine gegenseitige Phasenlage der beiden Schwingungssignale von den momentanen Massendurchflüssen in den Meßrohren 1, 2 wie auch 3, 4 und eine jeweilige Signalfrequenz von den momentanen Dichten der in den Meßrohren strömenden Medien abhängig sind. Ein Vorteil der Verwendung differentiell wirkender Schwingungserreger bzw. Schwingungssensoren im Zusammenhang mit den in vorbeschriebener Weise gebildeten Schwingungssystemen besteht ferner darin, daß zum Betreiben des Meßaufnehmers auch solche Meß- und Betriebselektroniken verwendet werden können, wie sie beispielsweise bereits in herkömmlichen Coriolis-Massedurchfluß-/ Dichtemeßgeräten Verwendung gefunden haben. Ein weiterer Vorteil ist darüber hinaus darin zu sehen, daß bei der Verwendung solcher herkömmlichen Meß- und Betriebselektroniken für den gezeigten Meßaufnehmer allein wegen des simultanen Hindurchleitens der beiden zu messenden Medien durch die Meßrohre die Differenz der beiden Massendurchflüsse direkt erfaßt werden kann, so daß auch die in herkömmlichen Coriolis-Massedurchfluß-/ Dichtemeßgeräten implemetierten Meßsignalverarbeitungs- und Auswerteverfahren ohne wesentliche, über eine allfällige Anpassung an die tatsächlichen Meßsignale und deren Signalpegel hinausgehende Änderung für die Differenzmessung verwendet werden können. Dies stellt zweifellos auch einen erheblichen Kostenvorteil dar.

Da der Meßaufnehmer noch an die zugehörige Meß- und Betriebselektronik anzuschließen und diese, wie bereits erwähnt, in dem ggf. direkt am Meßaufnehmer angeordnete Elektronik-Gehäuse 40 untergebracht ist, so daß ein funktionsfähiges, kompaktes In-Line-Meßgerät entsteht, ist schließlich am Tragsystem 30 gemäß der ersten Variante der Erfindung gegenüber den Scheitel-Bogensegmenten der Meßrohre und somit auch gegenüber dem Scheitel-Rahmensegment 35 die mehrere elektrische Leiter aufweisende, insb. mediumsdichte und druckfeste, Durchführung vorgesehen. Die Durchführung weist einen am Tragsystem 30, beispielsweise mittels Schweißverbindung, befestigten Flansch 90 auf, der dazu dient, das lediglich in Fig. 1 dargestellte Elektronik-Gehäuse 40 zu haltern. Der Flansch 90 hat eine Bohrung 91, so dass die Durchführung während der Montage von außerhalb des Aufnehmer-Gehäuses zugänglich ist. Die Durchführung umfasst ferner eine am Tragsystem 30 mittels einer abgewinkelten Halterung 95 befestigte und zwischen diesem sowie den Scheitel-Bogensegmenten auf diese zulaufenden Leiterplatte 96. Darauf sind Leitbahnen angeordnet, vgl. die Leitbahn 97, die nur in Fig. 2 zu sehen sind. An jeweils eine dieser Leitbahnen sind Anschluss-Leitungen 63, 64 der Erregeranordnung 60, Anschluss-Leitungen 73, 74, 75, 76 der Sensoranordnung 70 und Anschluss-Leitungen 83, 84 eines ersten Temperatursensors 81 sowie eines zweiten Temperatursensors 82 und somit auch an die einzelnen Leiter der Durchführung 500 angeschlossen. Die Anschluss-Leitungen 63, 64, 73, 74, 75, 76, 83, 84 sind nur in Fig.3 zu sehen. Zusätzlich ist auch eine Leitbahn SN für einen Schaltungsnullpunkt vorgesehen, die über metallische, mit ihr mechanisch und daher auch elektrisch verbundene Befestigungsmittel an der metallischen Halterung 95 fixiert ist. Der, insb. als ein Platin-Widerstand ausgebildete, Temperatursensor 81 (nur in Fig. 2 und 3 zu sehen) kann beispielsweise auf dem einem der Ein-/Auslaß-Bogensegmente des Meßrohrs 1, z.B. durch Kleben, befestigt sein. In gleicher Weise kann der Temperatursensor 82 auf eines der Ein-/Auslaß-Bogensegmente des Meßrohrs 3 aufgebracht sein. Die Temperatursensoren 81, 82 dienen, wie eingangs erwähnt, zum Messen der momentanen Temperatur des Mediums M₁ bzw. des Mediums M₂. Allerdings besteht insoweit auch die Möglichkeit einen Temperatursensor so im Meßaufnehmer anzuordnen, beispielsweise auf einer weiter unten noch näher beschriebenen, das erste und dritte Meßrohr verbindenden Knotenplatte oder Versbindungsscheibe, zwischen dem ersten und dem dritten Meßrohr, so daß er praktisch eine von beiden Medien M₁, M₂ beeinflußte mittlere Temperatur misst. Infolgedessen kann ggf. auch auf einen zweiten Temperatur für die Meßrohre verzichtet werden.

Wie aus der Fig. 3 ersichtlich, umfasst die oben genannte Durchführung ferner einen im Durchführungs-Rahmensegment 33 angebrachten Schlitz 361, durch die Leiterplatte 96 gesteckt ist und die sich in den Flansch 90 hinein erstreckt, wobei zwischen Leiterplatte 96 und Schlitz 361 ein zu deren elektrischer Isolierung ausreichender Abstand eingehalten ist. Weiters ist die Leiterplatte 96 durch eine auf dem Durchführung-Rahmensegment 33 bohrungsseitig aufliegende Scheibe 362 aus einem Isoliermaterial hindurch gesteckt. Eine isolierende Vergussmasse 363 füllt einen oberhalb der Scheibe 362 liegenden Teil der Bohrung 91 vollständig aus, wobei die Vergussmasse 363 auch mehr oder weniger in den Raum zwischen der Leiterplatte 96 und der Innenwand des Schlitzes 361 eingedrungen sein kann. Alternativ zu einem direkt am Tragsystem 30 fixierten Elektronik-Gehäuse 40 kann aber beispielsweise auch ein solches für die anzuschließende Betriebs- und Auswerte-Elektronik verwendet werden, das entfernt vom Meßaufnehmer angeordnet und mit diesem über ein entsprechendes Anschluss-Kabel verbunden ist.

Gemäß einer Ausgestaltung der Erfindung sind die Meßrohre 1, 2, 3, 4 zur Feinabstimmung von deren mechanischen Eigenfrequenzen und/oder zur Verminderung allfällig nach extern des Meßaufnehmers ausgekoppelter Vibrationen mittels einer ersten Knotenplatte 51 in der Nähe einer Stelle mechanisch miteinander verbunden, an der das jeweilige erste
Ein-/Auslaß-Rohrsegment in das jeweilige erste Ein-/ Auslaß-Bogensegment übergeht, und mittels einer zweiten Knotenplatte 52 in der Nähe einer Stelle mechanisch miteinander verbunden, an der das jeweilige erstes Ein-/ Auslaß-Bogensegment in das jeweilige erste Mittelrohrsegment übergeht. Nach Weiterbildung der Erfindung sind die Meßrohre 1, 2, 3, 4 ferner mittels einer dritten Knotenplatte 53 in der Nähe einer Stelle mechanisch miteinander verbunden, an der das jeweilige zweite Ein-/Auslaß-Rohrsegment in das jeweilige zweite Ein-/ Auslaß-Bogensegment übergeht, und mittels einer vierten Knotenplatte 54 in der Nähe einer Stelle mechanisch miteinander verbunden, an der das jeweilige zweite Ein-/ Auslaß-Bogensegment in das jeweilige zweite Mittelrohrsegment übergeht. Die vier Knotenplatten 51, 52, 53, 54 können beispielsweise dünne Scheiben, insb. aus demselben Material wie die Meßrohre. Diese Scheiben sind mit Bohrungen, deren InnenDurchmesser etwa dem Aussen-Durchmesser der Meßrohre 1, 2, 3, 4 entspricht, und mit Schlitzen versehen, so dass die Scheiben zunächst auf die Meßrohre 1, 2 aufgeklemmt und danach mit ihnen hartverlötet werden können; dabei werden auch die Schlitze miteinander hartverlötet, so dass die Scheiben ungeschlitzt auf den Meßrohren 1, 2, 3, 4 sitzen.

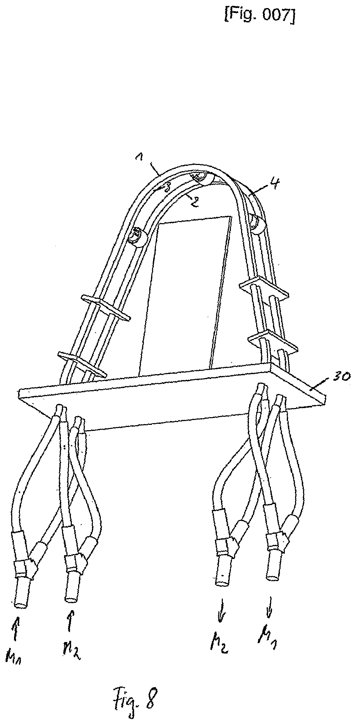

Nach einer weiteren Ausgestaltung der Erfindung, werden die Meßrohre 1, 2 sowohl bei dem in Fig. 2 und 3 als auch bei dem in Fig. 7 und 8 gezeigten Meßaufnehmer im Betrieb mittels der Erregeranordnung 60 in stimmgabel-artige Biegeschwingungen, so genannte Auslegerschwingungen, versetzt. Demgegenüber werden die Meßrohre 1, 2 bei dem Meßaufnehmer gemäß der dritten Variante in solche Biegeschwingungen versetzt, die im wesentlichen koplanar, also in einer gemeinsamen Schwingungsebene liegend, ausgebildet sind. Ferner ist vorgesehen ist vorgesehen auch das dritte und vierte Meßrohr 3, 4 jeweils in der vorbeschriebenen Weise schwingen zu lassen.

Die im Betrieb durch die Erregeranordnung 60 angeregten Schwingungen weisen gemäß einer weiteren Ausgestaltung der Erfindung ferner eine Schwingfrequenz auf, die in etwa gleich einer mechanischen Eigenfrequenz eines die vier Meßrohre umfassenden mechanischen Schwingungssystems ist oder die zumindest in der Nähe einer solchen Eigenfrequenz liegt. Infolgedessen kann einerseits die für die Aufrechterhaltung der Schwingungen momentan erforderliche elektrische Leistung minimiert werden. Anderseits ist so auch anhand der angeregten Schwingungsfrequenz eine mittlere Dichte beider Medien M₁, M₂ leicht ermittelbar. Darüber hinaus ist vorgesehen die im wesentlichen gleichfrequent schwingen gelassenen Meßrohre 1, 2, 3, 4 so anzuregen, daß zumindest bei nicht strömenden Medien M₁, M₂ das erste und dritte Meßrohr 1, 3 zueinander im wesentlichen synchron schwingen, d.h. mit im wesentlichen gleicher Schwingungsform, im wesentlichen gleicher Phasenlage und etwa gleicher Schwingungsamplitude. In dazu analoger Weise werden bei dieser Ausgestaltung der Erfindung auch das zweite und vierte Meßrohr 2, 4 zueinander im wesentlichen synchron schwingen gelassen.

Zur Minimierung des dafür erforderlichen technischen Aufwandes hinsichtlich der Auslegung der Erregeranordnung 60 und der Sensoranordnung 70 einerseits wie auch zur Verbesserung der Messgenauigkeit, insb. auch der Nullpunktstabilität, anderseits sind nach einer Weiterbildung der Erfindung das erste und das dritte Meßrohr 1, 3 jeweils von ihren ersten und zweiten Ein-/Auslassenden sowie auch von den ggf. vorgesehenen Knotenplatten 51, 52, 53, 54 entfernt zumindest punktuell derart miteinander im wesentlichen starr gekoppelt, daß beiden ggf. einander abschnittsweise berührenden Meßrohre 1, 3 unter Bildung eines die beiden Meßrohre 1, 3, nicht aber die beiden Meßrohre 2, 4 umfassenden ersten Meßrohr-Verbundes als ein gemeinsames erstes Schwingungssystem wirken. Anders gesagt, die beiden .Meßrohre 1, 3 sind innerhalb des betriebsgemäß Nutzschwingungen ausführenden Bereichs derart miteinander verbunden, daß deren oben erwähntes Synchron-Schwingen praktisch mechanisch erzwungen wird. Die mechanische Kopplung der beiden Meßrohre 1, 3 kann beispielsweise wiederum mittels, beispielsweise als dünne Scheiben oder Platten, als einfache Klemmblöcke oder dergleichen ausgebildete, Verbindungselemente VS₁, VS₂, VS₃ erfolgen, die voneinander beabstandet an den beiden Meßrohren 1, 3 in geeigneter Weise fixiert sind, z.B. durch Hartlöten, Schweißen oder Verschrauben. Die Verbindungsscheiben können dabei, wie auch in den Fig. 2 oder 3 angedeutet, z.B. auf der Höhe oder zumindest in der Nähe der Schwingungssensoren 71, 72 und/oder auf der Höhe oder in der Nähe des Schwingungserregers 61 angeordnet sein. In dazu analoger Weise sind bei dieser Weiterbildung der Erfindung auch das zweite und das vierte Meßrohr 2, 4 zur Bildung eines lediglich dieses beiden ggf. auch einander berührenden Meßrohre 2, 4 umfassenden, als ein gemeinsames zweites Schwingungssystem wirkenden zweiten Meßrohr-Verbundes ebenfalls jeweils von ihren ersten und zweiten Ein-/ Auslaßenden entfernt zumindest punktuell miteinander im wesentlichen starr gekoppelt. Auch hierfür können wiederum einfache Verbindungselemente VS₄, VS₅, VS₆ in der vorher beschriebenen Weise an den beiden Meßrohren 2, 4 angeordnet und fixiert werden. Alternativ oder in Ergänzung zu den Verbindungsscheiben kann die der Bildung des ersten oder zweiten Meßrohr-Verbundes dienende mechanische Kopplung auch so ausgebildet sein, daß die jeweiligen Meßrohre 1, 3 bzw. 2, 4 jeweils von ihren ersten und zweiten Ein-/ Auslaßenden entfernt über einen größeren Abschnitt hinweg durchgängig miteinander im wesentlichen starr gekoppelt sind.

Nach einer Ausgestaltung dieser Weiterbildung der Erfindung sind die Meßrohre so geformt und miteinander so mechanisch gekoppelt, daß das durch das erste und das dritte Meßrohr 1, 3 gebildete erste Schwingungssystem und das durch das zweite und das vierte Meßrohr 2, 4 gebildete zweite Schwingungssystem im wesentlichen die gleichen mechanischen Eigenfrequenzen aufweisen.

Nach einer weiteren Ausgestaltung werden die Meßrohre, angetrieben von der Erregeranordnung 60, im Betrieb mit im wesentlichen gleicher Schwingungsfrequenz, insb. auf einer gemeinsamen natürlichen Eigenfrequenz des ersten und des zweiten Schwingungssystems, schwingen gelassen. Vorzugsweise sind auch die Schwingungen der beiden Meßrohr-Verbunde so ausgebildet, daß die von den Meßrohren im Betrieb ausgeführten Vibrationen zumindest zeitweise als Biegeschwingungen um jeweils eine das erste und das jeweils zugehörige zweite Ein-/ Auslassende imaginär verbindende Schwingungsachse oder eine zu dieser im wesentlichen parallele gedachte Schwingungsachse ausgebildet sind. In vorteilhafter Weise sind die Schwingungen des ersten und zweiten Schwingungssystems dabei so ausgebildet, daß das erste und das zweite Meßrohr zumindest zeitweise zueinander im wesentlichen gegenphasig, also mit einer gegenseitigen Phasenverschiebung von etwa 180°, schwingen und auch das dritte und das vierte Meßrohr zumindest zeitweise zueinander im wesentlichen gegenphasig schwingen, während gleichzeitig die Meßrohre, die zu dem selben Meßrohr-Verbund gehören, also das erste und dritte Meßrohr 1, 3 bzw. das zweite und vierte Meßrohr 2, 4, zumindest bei ruhenden Medien jeweils zueinander im wesentlichen gleichphasig schwingen. Falls erforderlich, können die beiden Meßrohr-Verbunde aber auch, beispielsweise zum Zwecke der direkten Messung eines Gesamt-Massendurchflusses beider Medien M₁, M₂, zeitweise zueinander gleichphasig, also mit einer gegenseitigen Phasenverschiebung von etwa Null, schwingengelassen werden.

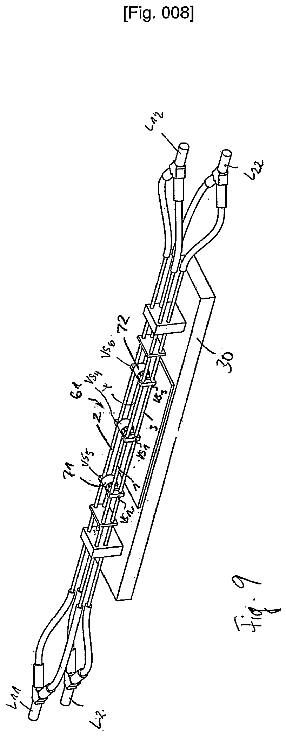

Wie in der Fig. 2 dargestellt, ist der Schwingungserreger 61 bei ersten Variante des Meßaufnehmers oberhalb des ersten und zweiten Meßrohrs und insoweit auch oberhalb eines gemeinsamen örtlichen Schwerpunkts aller vier Meßrohre angeordnet, der in einer durch die Einbaustelle des Schwingungserregers 61 hindurchgehenden gedachten Querschnittsebene liegt. Im Gegensatz dazu ist der Schwingungserreger 61 sowohl bei der in Fig. 7 und 8 gezeigten zweiten Variante des Meßaufnehmers als auch bei der in Fig. 9 gezeigten dritten Variante in etwa in Höhe des vorgenannten gemeinsamen Schwerpunkts angeordnet, so daß die dann durch den Schwingungserreger 61 in die Meßrohre 1, 2, 3, 4 eingeleitete Erregerkraft jeweils im wesentlichen in einem gemeinsamen Schwerpunkt des ersten und dritten Meßrohrs 1, 3 und in einem gemeinsamen Schwerpunkt des zweiten und vierten Meßrohrs 2, 4 angreift. Es sei an dieser Stelle allerdings ausdrücklich darauf hingewiesen, daß selbstverständlich auch bei einer Anordnung der Meßrohre gemäß der in Fig. 2 gezeigten ersten Variante, also mit paarweise übereinander gelegten gekrümmten Meßrohren, der Schwingungserreger so bezüglich der Meßrohre angeordnet und an diesen fixiert sein kann, daß auch die dann durch den Schwingungserreger in die Meßrohre eingeleitete Erregerkraft jeweils im wesentlichen in einem gemeinsamen örtlichen Schwerpunkt des ersten und dritten Meßrohrs und in einem gemeinsamen örtlichen Schwerpunkt des zweiten und vierten Meßrohrs angreift. Umgekehrt kann aber auch bei Anordnungen der Meßrohre gemäß der zweiten oder der dritten Variante des Meßaufnehmers, der entsprechende Schwingungserreger außerhalb des gemeinsamen Schwerpunkts der Meßrohre angeordnet sein. Dies hat besonders bei der in mit der dritten Variante des Meßaufnehmers gezeigten Meßrohranordnung den Vorteil, daß zusätzlich zu den Biegeschwingungen nützliche Torsionsschwingungen angeregt werden können, wodurch im jeweiligen Meßrohr momentan befindlichen Medium in erheblichem Maße auch vornehmlich von der Viskosität abhängige Reib- oder Scherkräfte induziert werden, die wiederum dämpfend und insoweit messbar auf die Schwingungen der Meßrohre zurückwirken. Abgeleitet davon kann somit auch zumindest eine mittlere Viskosität beider Medien M₁ M₂ anhand der Schwingungsmeßsignale und/oder anhand des in die Erregeranordnung 60 eingespeisten Erregerstroms ermittelt werden.

Die Bildung der zwei Meßrohr-Verbunde in der vorbeschriebenen Weise hat ferner den Vorteil, daß die vier Meßrohre zu zwei Schwingungssystemen reduziert werden, die jedes für sich praktisch wie ein einziges Meßrohr wirken, da die von dem einen Schwingungserreger 61 erzeugten Erregerkräfte aufgrund der mechanischen Kopplung sowohl zwischen dem ersten und dem zweiten Meßrohr 1, 2 als auch gleichermaßen zwischen dem dritten und vierten Meßrohr 3, 4 wirken und auch die zum Zwecke der Messung in den Medien verursachten Reaktionskräfte in jeweils über die miteinander gekoppelten Meßrohre der einzelnen Meßrohr-Verbunde jeweils einander überlagern und so gemeinsam auf die Schwingungssensoren zurück übertragen werden. Des weiteren werden in vorteilhafter Weise allfällige Unterschiede zwischen den beiden Medien, z.B. im Massendurchfluß, in der Temperatur und/oder Dichte etc., in gleichem Maße auf das erste wie auch das im wesentlichen dazu identische zweite Schwingungssystem übertragen, wodurch wiederum eine gegenseitige Kompensation von potentiell Messungenauigkeiten verursachenden Störungen auf sehr einfache Weise direkt im Meßaufnehmer erfolgen kann. Gleichermaßen kann durch die Verkopplung der Meßrohre zu Meßrohr-Verbunden der beschriebenen Art auch ein allfälliges asynchrones Schwingen der Meßrohre 1, 3 bzw. 2, 4 bei nicht-strömenden Medien M₁, M₂ wirksam vermieden werden, wodurch wiederum sichergestellt werden kann, daß im Betrieb auftretende asynchrone Schwingungen der Meßrohre 1, 3 bzw. 2, 4, die sich ja in einer entsprechenden Phasenverschiebung zwischen den beiden Schwingungsmeßsignalen s₁, s₂ niederschlagen, in überwiegendem Maße aus der zu messenden Differenz zwischen den Massendurchflüssen beider Medien M₁, M₂ resultiert.

Ein weiterer Vorteil der mechanischen Kopplung in der vorbeschriebenen Weise ist auch darin zu sehen, daß jeder der so gebildeten Meßrohr-Verbunde sowohl für die Erreger- als auch für die Sensoranordnung 60, 70 praktisch als ein einziges Meßrohr wirkt, und insoweit auch für die Meß- und Betriebselektronik. Dies führt wiederum dazu, daß zumindest für die Meßsignalvorverarbeitung und allfällige Digitalisierungen derselben auf bewährte Signalverarbeitungstechnologien und auch bewährte ,insb. zweikanalige, also von lediglich zwei Schwingungssensoren gelieferte Schwingungsmesssignale verarbeitende, Messschaltung aus dem Bereich der Coriolis-Massendurchflußmessung zurückgegriffen werden kann. Gleichermaßen können somit auch für die den Erreger treibende Betriebsschaltung ohne weiteres dem Fachmann bekannte, insb. auf einkanalige, also einen Erregerstrom für einen einzigen Erreger liefernde, Erregerschaltungen verwendet werden. Es sei an dieser allerdings Stelle ferner darauf hingewiesen, daß, insb. bei Verzicht auf die vorbeschriebene mechanische Verkopplung der Meßrohre 1, 2, 3, 4 zur Bildung des ersten und zweiten Schwingungssystems, zusätzlich zum ersten Schwingungserreger 61 weitere, insb. lediglich auf das dritte und vierte Meßrohr 3, 4 wirkende, Schwingungserreger vorgesehen sein können. Ebenso können weitere, insb. lediglich Schwingungen des dritten und vierten Meßrohrs 3, 4 erfassende, Schwingungssensoren vorgesehen sein.

In der ersten Variante des Meßaufnehmers, bei der das erste Meßrohr 1 sich an das dritte Meßrohr 3 und das zweite Meßrohr 2 sich an das vierte Meßrohr 4 in der in Fig. 2 und 3 gezeigten Weise angeordnet sind, so daß sie im wesentlichen parallel zu einander verlaufen, weist der Meßaufnehmer eine gedachte - hier im wesentlichen ebene - erste Schnittfläche auf, die das erste und das dritte Meßrohr so schneidet, daß darin sowohl die Mittellinie des ersten Meßrohrs 1 als auch die Mittellinie des dritten Meßrohrs 3 verlaufen. Ferner weist der Meßaufnehmer auch eine gedachte - hier ebenfalls im wesentlichen ebene - zweite Schnittfläche auf, die das zweite und das vierte Meßrohr so schneidet, daß darin deren beider Mittellinien gemeinsam verlaufen. Darüber hinaus sind die Meßrohre bei dieser Ausgestaltung vorzugsweise so im Meßaufnehmer angeordnet, daß diese beiden, insb. ebenen, Schnittflächen im wesentlichen zueinander parallel ausgerichtet sind. Dadurch bedingt sind das dritte und vierte Meßrohr 3, 4 allerdings jeweils etwas größer ausgebildet als das erste und zweite Meßrohr 1, 2. Im Gegensatz dazu sind sowohl bei der in Fig. 7 und 8 gezeigten zweiten Variante des Meßaufnehmers mit ebenfalls gekrümmten Meßrohren, deren jeweilige Mittellinien allerdings auf vier zueinander im wesentlichen parallele gedachte, insb. ebene, Schnittflächen verteilt sind, als auch bei der in Fig. 5 gezeigten dritten Variante mit geraden Meßrohren alle Meßrohre nicht nur im wesentlichen gleich geformt sondern auch im wesentlichen gleich groß ausgebildet.

Nach einer weiteren Ausgestaltung, insb. der zweiten oder der dritten Variante, der Erfindung sind die Meßrohre darüber hinaus so geformt und im Meßaufnehmer angeordnet, daß ein minimaler seitlicher Abstand zwischen dem ersten und dem zweiten Meßrohr wesentlich größer ist als ein maximaler seitlicher Abstand zwischen dem ersten und dem dritten Meßrohr und/oder ein maximaler seitlicher Abstand zwischen dem zweiten und dem vierten Meßrohr. Als sehr vorteilhaft - zum einen hinsichtlich der Fertigung und zum anderen aber auch hinsichtlich der erzielbaren Messgenauigkeit - hat es hierbei sich ferner erwiesen, wenn die Meßrohre dabei so ausgeführt im Meßaufnehmer angeordnet sind, daß das erste und das dritte Meßrohr einander zumindest abschnittsweise berühren und daß das zweite und das vierte Meßrohr einander zumindest abschnittsweise berühren, wodurch ein Temperaturausgleich zwischen den Meßrohren 1, 3 bzw. 2, 4 begünstigt wird. Besonders einfach und kostengünstig wie auch gut reproduzierbar lässt sich der Meßaufnehmer überdies dann herstellen, wenn das erste und das dritte Meßrohr 1, 3 jeweils von ihren ersten und zweiten Ein-/Auslaßenden nicht nur in der vorbeschriebenen Weise, einander berühren, sondern auch unter Bildung einer Verbindungsnaht miteinander verlötet, insb. hartverlötet, und/oder verschweißt sind, und wenn das zweite und das vierte Meßrohr 2, 4 jeweils von ihren ersten und zweiten Ein-/ Auslaßenden entfernt unter Bildung einer Verbindungsnaht ebenfalls miteinander verlötet, insb. hartverlötet, und/oder verschweißt sind.

Schließlich ist nach einer weiteren Ausgestaltung der Erfindung vorgesehen, das Tragsystem 30, insb. ebenfalls schwingfähig, von einem äußeren, insb. das gesamte In-Line-Meßgerät einhausenden, Tragwerk und/oder von wenigstens einer der angeschlossenen Mediumsleitungen zu haltern, insb. für den Fall, daß diese als eine im wesentlichen starre Rohrleitung ausgebildet ist.

## Patentansprüche

1. In-Line-Meßgerät zum Ermitteln eines Massendurchflusses eines in einer ersten Mediumsleitung strömenden ersten Mediums (M₁) und eines Massendurchflusses eines in einer zweiten Mediumsleitung strömenden zweiten Mediums (M₂) und/oder zum Ermitteln einer Bilanz zwischen einem in einer ersten Mediumsleitung mindestens temporär strömenden ersten Medium (M₁) sowie einem in einer zweiten Mediumsleitung mindestens temporär strömenden zweiten Medium (M₂), insb. nämlich einer Differenz zwischen den Massendurchflüssen der beiden Medien und/oder einer Summe von den Massendurchflüssen der beiden Medien, welches In-Line-Meßgerät einen Meßaufnehmer vom Vibrationstyp zum Messen von strömungsfähigen Medien umfaßt, **dadurch gekennzeichnet dass** der Meßaufnehmer umfaßt:
- wenigstens vier jeweils ein erstes und ein zweites Ein-/Auslassende aufweisende, im Betrieb zumindest zeitweise, insb. gleichzeitig, vibrierende Meßrohre (1, 2, 3, 4) zum Führen von zu messenden Medien,
- eine Vibrationen der Meßrohre bewirkende elektro-mechanische, insb. elektro-dynamische, Erregeranordnung (60), sowie
- eine zumindest auf örtliche Vibrationen der Meßrohre reagierende Sensoranordnung (70) zum Erzeugen wenigstens eines von Vibrationen wenigstens eines der Meßrohre beeinflußten Meßsignals,
- wobei von den wenigstens vier Meßrohren ein erstes und ein zweites Meßrohr (1, 2) ausgestaltet sind, zumindest zeitweise derart in den Verlauf der ersten Mediumsleitung eingesetzt zu werden, daß jedes dieser beiden Meßrohre (1, 2) gleichzeitig jeweils ein Teilvolumen des durch die erste Mediumsleitung strömenden Mediums (M₁) führt, und
- wobei von den wenigstens vier Meßrohren ein drittes und ein viertes Meßrohr (3, 4) ausgestaltet sind, zumindest zeitweise derart in den Verlauf der zweiten Mediumsleitung eingesetzt zu werden, daß jedes dieser beiden Meßrohre (3, 4) gleichzeitig jeweils ein Teilvolumen des durch die zweite Mediumsleitung strömenden Mediums (M₂) führt.

2. In-Line-Meßgerät nach Anspruch 1,
- bei dem das erste Ein-/Auslassende jeweils des ersten und des zweiten Meßrohrs (1, 2) im Betrieb mit einem ersten Verteilerelement (V₁) sowie das zweite Ein-/ Auslassende jeweils des ersten und des zweiten Meßrohrs (1, 2) im Betrieb mit einem zweiten Verteilerelement (V₂) verbunden sind, und
- bei dem das erste Ein-/Auslassende jeweils des dritten und des vierten Meßrohrs (3, 4) im Betrieb mit einem dritten Verteilerelement (V₃) sowie das zweite Ein-/ Auslassende jeweils des dritten und des vierten Meßrohrs (3, 4) im Betrieb mit einem vierten Verteilerelement (V₄) verbunden sind,
- wobei das erste Verteilerelement (V₁) an ein Medium dem Meßaufnehmer zuführendes erstes Leitungssegment (L₁₁) der ersten Mediumsleitung und das zweite Verteilerelement (V₂) an ein Medium vom Meßaufnehmer abführendes zweites Leitungssegment (L₁₂) der ersten Mediumsleitung angeschlossen sind, und .
- wobei das dritte Verteilerelement (V₃) an ein Medium dem Meßaufnehmer zuführendes erstes Leitungssegment (L₂₁) der zweiten Mediumsleitung und das vierte Verteilerelement (V₄) an ein Medium vom Meßaufnehmer abführendes zweites Leitungssegment (L₂₂) der zweiten Mediumsleitung angeschlossen sind.

3. In-Line-Meßgerät nach einem der vorherigen Ansprüche, bei dem die Erregeranordnung (60) einen, insb. differentiell wirkenden, elektro-dynamischen Schwingungserreger umfaßt, der über eine mit dem ersten und/oder dem dritten Meßrohr (1, 3) im wesentlichen starr gekoppelt Erregerspule (61a) sowie einen in diese eintauchenden, mit dem zweiten und/oder dem vierten Meßrohr (2, 4) im wesentlichen starr gekoppelten Tauchanker (61b) auf die Meßrohre (1, 2, 3, 4) einwirkt.

4. In-Line-Meßgerät nach Anspruch 3, bei dem der Schwingungserreger (61) oberhalb eines gemeinsamen örtlichen Schwerpunkts aller vier Meßrohre (1, 2, 3, 4) angeordnet ist, der in einer durch die Einbaustelle des Schwingungserregers (61) hindurchgehenden gedachten Querschnittsebene liegt.

5. In-Line-Meßgerät nach Anspruch 3, bei dem der Schwingungserreger (61) so im Meßaufnehmer angeordnet und an den Meßrohren (1, 2, 3, 4) fixiert ist, daß eine durch den Schwingungserreger in die Meßrohre eingeleitete Erregerkraft jeweils im wesentlichen in einem gemeinsamen örtlichen Schwerpunkt des ersten und dritten Meßrohrs (1, 3) und in einem gemeinsamen örtlichen Schwerpunkt des zweiten und vierten Meßrohrs (2, 4) angreift, welche beiden Schwerpunkte in einer durch die Einbaustelle des Schwingungserregers (61) hindurchgehenden gedachten Querschnittsebene liegen.

6. In-Line-Meßgerät nach einem der Ansprüche 3 bis 5, bei dem die Sensoranordnung (70) als eine, insb. differentiell wirkende, elektro-dynamische Sensoranordnung ausgebildet ist, die wenigstens zwei zu der Erregerspule (61a) der Erregeranordnung jeweils im wesentlichen baugleiche Sensorspulen (71a, 72a) sowie zwei zu dem Tauchanker (61b) der Sensoranordnung jeweils im wesentliche baugleiche Tauchanker (71b, 72b) umfasst.

7. In-Line-Meßgerät nach dem vorherigen Anspruch, bei dem die Sensoranordnung genau zwei Sensorspulen sowie genau zwei zu dem Tauchanker umfasst.

8. In-Line-Meßgerät nach einem der vorherigen Ansprüche, der ferner ein erstes Tragsystem (30) zum schwingfähigen Haltern der Meßrohre (1, 2, 3, 4) umfasst, wobei das erste Tragsystem (30) an wenigstens einem ersten Ein-/Auslaßende eines der vier Meßrohre und an wenigstens einem zweiten Ein-/Auslaßende eines der vier Meßrohre (1, 2, 3, 4) fixiert ist.

9. In-Line-Meßgerät nach dem vorherigen Anspruch, bei dem das erste Tragsystem (30) am ersten und am zweiten Ein-/Auslaßende von wenigstens zwei der vier, insb. von jedem der vier, Meßrohre (1, 2, 3, 4) fixiert ist.

10. In-Line-Meßgerät nach einem der vorherigen Ansprüche,
- wobei die Meßrohre (1, 2, 3, 4) so geformt und im Meßaufnehmer angeordnet sind, daß ein minimaler seitlicher Abstand zwischen dem ersten und dem zweiten Meßrohr (1, 2) wesentlich größer ist als ein maximaler seitlicher Abstand zwischen dem ersten und dem dritten Meßrohr (1, 3) und/oder als ein maximaler seitlicher Abstand zwischen dem zweiten und dem vierten Meßrohr (2, 4); und/oder
- wobei die Meßrohre (1, 2, 3, 4) so geformt und im Meßaufnehmer angeordnet sind, daß sie zumindest abschnittsweise zueinander im wesentlichen parallel verlaufen.

11. In-Line-Meßgerät nach dem vorherigen Anspruch, bei dem das erste und das dritte Meßrohr (1, 3) einander zumindest abschnittsweise berühren und bei dem das zweite und das vierte Meßrohr (2, 4) einander zumindest abschnittsweise berühren.

12. In-Line-Meßgerät nach einem der vorherigen Ansprüche, bei dem das erste und das dritte Meßrohr (1, 3) zur Bildung eines ersten Meßrohr-Verbundes jeweils von ihren ersten und zweiten Ein-/Auslaßenden entfernt zumindest punktuell miteinander im wesentlichen starr gekoppelt sind und bei dem das zweite und das vierte Meßrohr (2, 4) zur Bildung eines zweiten Meßrohr-Verbundes jeweils von ihren ersten und zweiten Ein-/ Auslaßenden entfernt zumindest punktuell miteinander im wesentlichen starr gekoppelt sind.

13. In-Line-Meßgerät nach einem der vorherigen Ansprüche, bei dem das erste und das dritte Messrohr (1, 3), jeweils von ihren ersten und zweiten Ein-/Auslaßenden entfernt zumindest abschnittsweise miteinander im wesentlichen starr gekoppelt sind und bei dem das zweite und das vierte Meßrohr (2, 4) jeweils von ihren ersten und zweiten Ein-/Auslaßenden entfernt zumindest abschnittsweise flächig miteinander im wesentlichen starr gekoppelt sind.

14. In-Line-Meßgerät nach dem vorherigen Anspruch, bei dem das erste und das dritte Meßrohr (1, 3) jeweils von ihren ersten und zweiten Ein-/Auslaßenden entfernt unter Bildung einer Verbindungsnaht miteinander verlötet, insb. hartverlötet, und/oder verschweißt sind und bei dem das zweite und das vierte Meßrohr (2, 4) jeweils von ihren ersten und zweiten Ein-/Auslaßenden entfernt unter Bildung einer Verbindungsnaht miteinander verlötet, insb. hartverlötet, und/oder verschweißt sind.

15. In-Line-Meßgerät nach einem der Ansprüche 12 bis 14, bei dem ein durch das erste und das dritte Meßrohr (1, 3) gebildetes erstes Schwingungssystem und ein durch das zweite und das vierte Meßrohr (2, 4) gebildetes zweites Schwingungssystem im wesentlichen gleiche Eigenfrequenzen aufweisen.

16. In-Line-Meßgerät nach dem vorherigen Anspruch, bei dem die Meßrohre (1, 2, 3, 4) im Betrieb mit im wesentlichen gleicher Schwingungsfrequenz, insb. auf einer natürlichen Eigenfrequenz des ersten und des zweiten Schwingungssystem, schwingen.

17. In-Line-Meßgerät nach dem vorherigen Anspruch, bei dem das erste und das zweite Meßrohr (1, 2) zumindest zeitweise zueinander im wesentlichen gegenphasig schwingen und bei dem das dritte und das vierte Meßrohr (3, 4) zumindest zeitweise zueinander im wesentlichen gegenphasig schwingen.

18. In-Line-Meßgerät nach einem der vorherigen Ansprüche, bei dem die von den Meßrohren (1, 2, 3, 4) im Betrieb ausgeführten Vibrationen zumindest zeitweise als Biegeschwingungen um jeweils eine das erste und das jeweils zugehörige zweite Ein-/ Auslassende imaginär verbindende Achse oder eine zu dieser parallele gedachte Achse ausgebildet sind.

19. In-Line-Meßgerät nach einem der vorherigen Ansprüche, bei dem jedes der vier Meßrohre (1, 2, 3, 4) ein sein jeweiliges erstes Ein-/Auslassende und sein jeweiliges zweites Ein-/Auslassende imaginär verbindende Mittellinie aufweist.

20. In-Line-Meßgerät nach Anspruch 19, bei dem bei dem die Meßrohre (1, 2, 3, 4) so geformt und im Meßaufnehmer angeordnet sind, daß mindestens zwei der vier gedachten Mittellinien in einer gedachten gemeinsamen, insb. ebenen, Schnittfläche des Meßaufnehmers verlaufen.

21. In-Line-Meßgerät nach dem vorherigen Anspruch, bei dem die Meßrohre (1, 2, 3, 4) so geformt und im Meßaufnehmer angeordnet sind, daß die vier gedachten Mittellinien auf zwei gedachte, zueinander im wesentlichen parallele, insb. ebene, Schnittflächen des Meßaufnehmers verteilt sind.

22. In-Line-Meßgerät nach Anspruch 19, bei dem die Meßrohre (1, 2, 3, 4) so geformt und im Meßaufnehmer angeordnet sind, daß die vier gedachten Mittellinien auf vier gedachte, zueinander im wesentlichen parallele, insb. ebene, Schnittflächen des Meßaufnehmers verteilt sind.

23. In-Line-Meßgerät nach Anspruch 19, bei dem die Meßrohre (1, 2, 3, 4) so geformt und im Meßaufnehmer angeordnet sind, daß alle vier gedachten Mittellinien in einer gemeinsamen gedachten, insb. ebene, Schnittflächen des Meßaufnehmers verlaufen.

24. In-Line-Meßgerät nach einem der vorherigen Ansprüche, bei dem die vier Meßrohre (1, 2, 3, 4) im wesentlichen gerade sind.

25. In-Line-Meßgerät nach einem der vorherigen Ansprüche, bei dem die vier Meßrohre (1, 2, 3, 4) im wesentlichen gleichermaßen, insb. V- oder U-förmig, gekrümmt sind.

26. In-Line-Meßgerät nach vorherigen Anspruch, bei dem die vier Meßrohre (1, 2, 3, 4) im wesentlichen V-förmig gekrümmt sind.

27. In-Line-Meßgerät nach einem der vorherigen Ansprüche, bei dem die vier Meßrohre (1, 2, 3, 4) im wesentlichen identisch geformt sind.

28. In-Line-Meßgerät nach einem der vorherigen Ansprüche, bei dem die im ersten und zweiten Meßrohr (1, 2) geführten Teilvolumina vom in der ersten Mediumsleitung strömenden Medium (M₁) eine gemeinsame Strömungsrichtung aufweisen, die zumindest zeitweise einer gemeinsamen Strömungsrichtung der im dritten und vierten Meßrohr (3, 4) geführten Teilvolumina vom in der zweiten Mediumsleitung strömenden Medium (M₂) entgegengerichtet ist.

29. In-Line-Meßgerät nach einem der vorherigen Ansprüche, bei dem die im ersten und zweiten Meßrohr (1, 2) geführten Teilvolumina vom in der ersten Mediumsleitung strömenden Medium (M₁) eine gemeinsame Strömungsrichtung aufweisen, die zumindest zeitweise zu einer gemeinsamen Strömungsrichtung der im dritten und vierten Meßrohr (3, 4) geführten Teilvolumina vom in der zweiten Mediumsleitung strömenden Medium (M₂) gleichgerichtet ist.

30. In-Line-Meßgerät nach einem der vorherigen Ansprüche, bei dem das erste Tragsystem (30) von einem äußeren, insb. den Meßaufnehmer einhausenden, zweiten Tragsystem und/oder von wenigstens einer der angeschlossenen Mediumsleitungen, insb. schwingfähig, gehaltert ist.

31. In-Line-Meßgerät nach einem der vorherigen Ansprüche, bei dem der Meßaufnehmer wenigstens einen mit wenigstens einem der Meßrohre (1, 2, 3, 4) thermisch gekoppelten, auf Änderungen von dessen Meßrohr-Temperatur reagierenden Temperatursensor (81, 82) aufweist.

32. In-Line-Meßgerät nach einem der vorherigen Ansprüche, weiters umfassend: eine, insb. eine in einem Elektronik-Gehäuse (40) untergebrachte, mit dem Meßaufnehmer (10) elektrisch verbundene Meß- und Betriebs-Elektronik.

33. In-Line-Meßgerät nach dem vorherigen Anspruch, weiters umfassend: ein, insb. direkt am Meßaufnehmer angeordnetes, Elektronik-Gehäuse (40), wobei die Meß- und Betriebs-Elektronik im Elektronik-Gehäuse (40) untergebracht ist.

## Claims

1. In-line measuring device for determining a mass flow of a first medium (M₁) flowing through a first medium pipe and a mass flow of a second medium (M₂) flowing through a second medium pipe and/or for determining a balance between a first medium (M₁) flowing at least temporarily through a first medium pipe and a second medium (M₂) flowing at least temporarily through a second medium pipe, particularly a difference between the mass flows of the two media and/or a total of the mass flows of the two media, said in-line measuring device having a vibronic-type sensor to measure flowable media,
**characterized in that**
the sensor comprises:
- at least four measuring tubes (1, 2, 3, 4) that vibrate at least temporarily during operation, particularly simultaneously, each tube having a first and a second inlet/outlet end and being designed to conduct media to be measured,
- an electromechanical, particularly electrodynamic, exciter arrangement (60) causing vibrations of the measuring tubes, and
- a sensor arrangement (70) responding at least to local vibrations of the measuring tubes, said arrangement being designed to generate at least one measuring signal influenced by vibrations of at least one of the measuring tubes,
- wherein a first and a second measuring tube (1, 2) of the at least four measuring tubes are designed to be inserted at least temporarily in the course of the first medium pipe in such a way that each of these two measuring tubes (1, 2) simultaneously conduct a partial volume of the medium (M₁) flowing through the first medium pipe, and
- wherein a third and a fourth measuring tube (3, 4) of the at least four measuring tubes are designed to be inserted at least temporarily in the course of the second medium pipe in such a way that each of these two measuring tubes (3, 4) simultaneously conduct a partial volume of the medium (M₂) flowing through the second medium pipe.

2. In-line measuring device as claimed in Claim 1,
- wherein, in each case, the first inlet/outlet end of the first and the second measuring tube (1, 2) are connected during operation with a first distributor element (V₁), and wherein, in each case, the second inlet/outlet of the first and second measuring tube (1, 2) are connected during operation with a second distributor element (V₂), and
- wherein, in each case, the first inlet/outlet end of the third and the fourth measuring tube (1, 2) are connected during operation with a third distributor element (V₃), and wherein, in each case, the second inlet/outlet of the third and fourth measuring tube (3, 4) are connected during operation with a fourth distributor element (V₄),
- wherein the first distributor element (V₁) is connected to a first pipe segment (L₁₁) of the first medium pipe, said segment supplying medium to the sensor, and the second distributor element (V₂) is connected to a second pipe segment (L₁₂) of the first medium pipe, said segment conducting medium away from the sensor, and
- wherein the third distributor element (V₃) is connected to a first pipe segment (L₂₁) of the second medium pipe, said segment supplying medium to the sensor, and the fourth distributor element (V₄) is connected to a second pipe segment (L₂₂) of the second medium pipe, said segment conducting medium away from the sensor.

3. In-line measuring device as claimed in one of the previous claims, wherein the exciter arrangement (60) comprises an electrodynamic vibration exciter, particularly acting in a differential manner, said exciter acting on the measuring tubes (1, 2, 3, 4) by means of an exciter coil (61a), which is coupled essentially in a rigid manner with the first and/or third measuring tube (1, 3), as well as an plunger (61b) which is immersed therein and is coupled essentially in a rigid manner with the second and/or fourth measuring tube (2, 4).

4. In-line measuring device as claimed in Claim 3, wherein the vibration exciter (61) is arranged over a common local center of gravity of all four measuring tubes (1, 2, 3, 4), said center of gravity being located in an imaginary cross-sectional plane passing through the installation point of the vibration exciter (61).

5. In-line measuring device as claimed in Claim 3, wherein the vibration exciter (61) is arranged in the sensor and on the measuring tubes (1, 2, 3, 4) in such a way that an excitation force introduced into the measuring tubes by the vibration exciter is applied in each case in a common local center of gravity of the first and third measuring tube (1, 3) and in a common local center of gravity of the second and fourth measuring tube (2, 4), said two centers of gravity being located in an imaginary cross-sectional plane passing through the installation point of the vibration exciter (61).

6. In-line measuring device as claimed in one of the Claims 3 to 5, wherein the sensor arrangement (70) is designed as an electrodynamic sensor arrangement, particularly acting in a differential manner, comprising at least two sensor coils (71a, 72a) that are essentially identical in construction to the exciter coil (61a) of the exciter arrangement and two plungers (71b, 72b) that are essentially identical in construction to the plunger (61b) of the sensor arrangement.

7. In-line measuring device as claimed in the previous claim, wherein the sensor arrangement comprises exactly two sensor coils and exactly two plungers.

8. In-line measuring device as claimed in one of the previous claims, which further comprises a first support system (30) designed to support the measuring tubes (1, 2, 3, 4) in a manner that allows vibration, wherein the first support system (30) is fixed on at least a first inlet/outlet end of one of the four measuring tubes and on at least a second inlet/outlet end of one of the four measuring tubes (1, 2, 3, 4).

9. In-line measuring device as claimed in the previous claim, wherein the first support system (30) is fixed on the first and on the second inlet/outlet end of at least two of the four, particularly of each of the four, measuring tubes (1, 2, 3, 4).

10. In-line measuring device as claimed in one of the previous claims,
- wherein the measuring tubes (1, 2, 3, 4) are shaped and arranged in the sensor in such a way that a minimum lateral distance between the first and the second measuring tube (1, 2) is essentially greater than a maximum lateral distance between the first and third measuring tube (1, 3) and/or than a maximum lateral distance between the second and fourth measuring tube (2, 4); and/or
- wherein the measuring tubes (1, 2, 3, 4) are shaped and arranged in the sensor in such a way that they are essentially parallel to one another at least partially.

11. In-line measuring device as claimed in the previous claim, wherein the first and third measuring tube (1, 3) touch one another at least in sections and wherein the second and fourth measuring tube (2, 4) touch one another at least in sections.

12. In-line measuring device as claimed in one of the previous claims, wherein the first and the third measuring tube (1, 3) are coupled together in an essentially rigid manner at least at points, at a distance, in each case, from their first and second inlet/outlet ends, for the purpose of forming a first measuring tube group, and wherein the second and the fourth measuring tube (2, 4) are coupled together in an essentially rigid manner at least at points, at a distance, in each case, from their first and second inlet/outlet ends, for the purpose of forming a second measuring tube group.

13. In-line measuring device as claimed in one of the previous claims, wherein the first and the third measuring tube (1, 3) are coupled together in an essentially rigid manner at least in sections, at a distance, in each case, from their first and second inlet/outlet ends, and wherein the second and fourth measuring tube (2, 4) are coupled together across an area at least in sections in an essentially rigid manner, at a distance, in each case, from their first and second inlet/outlet ends.

14. In-line measuring device as claimed in the previous claim, wherein the first and second measuring tube (1, 3) are soldered together, particularly hard-soldered, and or welded, at a distance, in each case, from their first and second inlet/outlet ends, forming a joining seam, and wherein the second and the fourth measuring tube (2, 4) are soldered together, particularly hard-soldered, and or welded, at a distance, in each case, from their first and second inlet/outlet ends, forming a joining seam.

15. In-line measuring device as claimed in Claims 12 to 14, wherein a first vibration system formed by the first and third measuring tube (1, 3) and a second vibration system formed by the second and fourth measuring tube (2, 4) have essentially identical intrinsic frequencies.

16. In-line measuring device as claimed in the previous claim, wherein, during operation, the measuring tubes (1, 2, 3, 4) vibrate essentially at the same vibration frequency, particularly at a natural frequency of the first and of the second vibration system.

17. In-line measuring device as claimed in the previous claim, wherein the first and second measuring tube (1, 2) vibrate essentially in phase opposition in relation to one another at least temporarily and wherein the third and the fourth measuring tube (3, 4) vibrate essentially in phase opposition in relation to one another at least temporarily.

18. In-line measuring device as claimed in one of the previous claims, wherein the vibrations executed during operation by the measuring tubes (1, 2, 3, 4) are formed at least temporarily as bending vibrations around an axis connecting, in each case, in an imaginary manner the first and the associated second inlet/outlet end or around an imaginary axis parallel thereto.

19. In-line measuring device as claimed in one of the previous claims, wherein each of the four measuring tubes (1, 2, 3, 4) has a median line connecting, in an imaginary manner, its first inlet/outlet end and its second inlet/outlet end.

20. In-line measuring device as claimed in Claim 19, wherein the measuring tubes (1, 2, 3, 4) are formed and arranged in the sensor in such a way that at least two of the four imaginary median lines run in an imaginary common cut section, particularly planar, of the sensor.

21. In-line measuring device as claimed in the previous claim, wherein the measuring tubes (1, 2, 3, 4) are formed and arranged in the sensor in such a way that the four imaginary median lines are distributed to two imaginary cut sections, particularly planar, of the sensor, said sections being essentially parallel to one another.

22. In-line measuring device as claimed in Claim 19, wherein the measuring tubes (1, 2, 3, 4) are formed and arranged in the sensor in such a way that the four imaginary median lines are distributed to four imaginary cut sections, particularly planar, of the sensor, said sections being essentially parallel to one another.

23. In-line measuring device as claimed in Claim 19, wherein the measuring tubes (1, 2, 3, 4) are formed and arranged in the sensor in such a way that all four imaginary median lines run in an imaginary common cut section, particularly planar, of the sensor.

24. In-line measuring device as claimed in one of the previous claims, wherein the four measuring tubes (1, 2, 3, 4) are essentially straight.

25. In-line measuring device as claimed in one of the previous claims, wherein the four measuring tubes (1, 2, 3, 4) are essentially curved in the same way, particularly in the shape of a V or U.

26. In-line measuring device as claimed in the previous claim, wherein the four measuring tubes (1, 2, 3, 4) are essentially curved in the shape of a V.

27. In-line measuring device as claimed in one of the previous claims, wherein the four measuring tubes (1, 2, 3, 4) are formed essentially in an identical manner.

28. In-line measuring device as claimed in one of the previous claims, wherein the partial volumes of the medium (M₁) flowing through the first medium pipe, and conducted in the first and second measuring tube (1, 2), have a common flow direction which is opposed at least temporarily to a common flow direction of the partial volumes of the medium (M₂) flowing through the second medium pipe, and conducted in the third and fourth measuring tube (3, 4).

29. In-line measuring device as claimed in one of the previous claims, wherein the partial volumes of the medium (M₁) flowing through the first medium pipe, and conducted in the first and second measuring tube (1, 2), have a common flow direction which is identical at least temporarily to a common flow direction of the partial volumes of the medium (M₂) flowing through the second medium pipe, and conducted in the third and fourth measuring tube (3, 4).

30. In-line measuring device as claimed in one of the previous claims, wherein the first support system (30) is supported, particularly in a manner that allows vibration, by an outer second support system, particularly enclosing the sensor, and/or by at least one of the connected medium pipes.

31. In-line measuring device as claimed in one of the previous claims, wherein the sensor has at least one temperature sensor (81, 82) that is thermally coupled with at least one of the measuring tubes (1, 2, 3, 4) and responds to changes in the measuring tube temperature.

32. In-line measuring device as claimed in one of the previous claims, further comprising a measuring and operating electronics unit that is electrically connected to the sensor (10) and particularly accommodated in an electronics housing (40).

33. In-line measuring device as claimed in the previous claim, further comprising an electronics housing (40), particularly arranged directly on the sensor, wherein the measuring and operating electronics unit is accommodated in the electronics housing (40).

## Revendications

1. Appareil de mesure en ligne destiné à la détermination d'un débit massique d'un premier produit (M₁) s'écoulant dans une première conduite et d'un débit massique d'un deuxième produit (M₂) s'écoulant dans une deuxième conduite et/ou à la détermination d'un bilan entre un premier produit (M₁) s'écoulant au moins temporairement dans une première conduite de produit et un deuxième produit (M₂) s'écoulant au moins temporairement dans une deuxième conduite de produit, notamment une différence entre les débits massiques des deux produits et/ou une somme des débits massiques des deux produits, lequel appareil de mesure en ligne comprend un transmetteur de mesure du type à vibrations, destiné à la mesure de produits aptes à s'écouler,
**caractérisé**
**en ce que** le transmetteur de mesure comprend :
- au moins quatre tubes de mesure (1, 2, 3, 4) vibrant au moins temporairement en fonctionnement, notamment simultanément, et présentant une première et une deuxième extrémité d'entrée / de sortie, lesquels tubes sont destinés à acheminer les produits à mesurer,
- un circuit d'excitation (60) électromécanique, notamment électrodynamique, générant des vibrations des tubes de mesure, ainsi que
- un circuit de détection (70) réagissant au moins aux vibrations locales des tubes de mesure, lequel circuit est destiné à générer au moins un signal de mesure influencé par les vibrations d'au moins l'un des tubes de mesure,
- un premier et un deuxième tubes de mesure (1, 2) parmi les au moins quatre tubes de mesure étant conçus, au moins temporairement de manière à être insérés dans le tracé de la première conduite de produit, si bien que chacun de ces deux tubes de mesure (1, 2) achemine simultanément un volume partiel du produit (M₁) s'écoulant à travers la première conduite de produit, et
- un troisième et un quatrième tubes de mesure (3, 4) parmi les au moins quatre tubes de mesure étant conçus, au moins temporairement de manière à être insérés dans le tracé de la deuxième conduite de produit, si bien que chacun de ces deux tubes de mesure (3, 4) achemine simultanément un volume partiel du produit (M₂) s'écoulant à travers la deuxième conduite de produit.

2. Appareil de mesure en ligne selon la revendication 1,
- pour lequel la première extrémité d'entrée / de sortie respectivement du premier et du deuxième tube de mesure (1, 2) est reliée, en fonctionnement, avec un premier élément répartiteur (V₁), ainsi que la deuxième extrémité d'entrée / de sortie respectivement du premier et du deuxième tube de mesure (1, 2) est reliée, en fonctionnement, avec un deuxième élément répartiteur (V₂), et
- pour lequel la première extrémité d'entrée / de sortie respectivement du troisième et du quatrième tube de mesure (3, 4) est reliée, en fonctionnement, avec un troisième élément répartiteur (V₃), ainsi que la deuxième extrémité d'entrée / de sortie respectivement du troisième et du quatrième tube de mesure (3, 4) est reliée, en fonctionnement, avec un quatrième élément répartiteur (V₄),
- pour lequel le premier élément répartiteur (V₁) est raccordé à un premier segment de conduite (L₁₁) de la première conduite de produit, acheminant le produit au transmetteur de mesure, et le deuxième élément répartiteur (V₂) est raccordé à un deuxième segment de conduite (L₁₂) de la première conduite de produit, acheminant le produit au transmetteur de mesure, et
- pour lequel le troisième élément répartiteur (V₃) est raccordé à un premier segment de conduite (L₂₁) de la deuxième conduite de produit, acheminant le produit au transmetteur de mesure, et le quatrième élément répartiteur (V₄) est raccordé à un deuxième segment de conduite (L₂₂) de la deuxième conduite de produit, acheminant le produit au transmetteur de mesure.

3. Appareil de mesure en ligne selon l'une des revendications précédentes, pour lequel le circuit d'excitation (60) comprend un excitateur de vibrations électrodynamique, notamment agissant de façon différentielle, lequel excitateur agit sur les tubes de mesure (1, 2, 3, 4) par l'intermédiaire d'une bobine d'excitation (61a), pour l'essentiel couplée de façon rigide, avec le premier et/ou le troisième tubes de mesure (1, 3), ainsi que par l'intermédiaire d'un noyau plongeur (61b), pour l'essentiel couplé de façon rigide, avec le deuxième et/ou le quatrième tubes de mesure (2, 4).

4. Appareil de mesure en ligne selon la revendication 3, pour lequel l'excitateur de vibrations (61) est disposé au-delà d'un centre de gravité local de l'ensemble des quatre tubes de mesure (1, 2, 3, 4), lequel centre de gravité se situe dans un plan de section imaginaire traversant l'emplacement de montage de l'excitateur de vibrations (61).

5. Appareil de mesure en ligne selon la revendication 3, pour lequel l'excitateur de vibrations (61) est disposé dans le transmetteur de mesure et fixé sur les tubes de mesure (1, 2, 3, 4) de telle sorte qu'une force d'excitation générée par l'excitateur de vibrations dans les tubes de mesure est appliquée pour l'essentiel au niveau d'un centre de gravité local commun du premier et du troisième tubes de mesure (1, 3) et au niveau d'un centre de gravité local commun du deuxième et du quatrième tubes de mesure (2, 4), les deux centres de gravité se situant dans un plan de section imaginaire traversant l'emplacement de montage de l'excitateur de vibrations (61).

6. Appareil de mesure en ligne selon la revendication 3 à 5, pour lequel le circuit de détection (70) est conçu en tant qu'ensemble de détection électrodynamique, notamment agissant de façon différentielle, lequel ensemble comprend au moins deux bobines de détection (71a, 72a) pour l'essentiel de construction identique à la bobine d'excitation (61a) du circuit d'excitation, ainsi que deux noyaux plongeurs (71b, 72b) pour l'essentiel de construction identique au noyau plongeur (61b) du circuit d'excitation.

7. Appareil de mesure en ligne selon la revendication précédente, pour lequel le circuit de détection comprend exactement deux bobines de détection ainsi que deux noyaux plongeurs.

8. Appareil de mesure en ligne selon l'une des revendications précédentes, qui comprend en outre un premier système support (30) destiné à supporter les tubes de mesure (1, 2, 3, 4) de façon apte à vibrer, le premier système support (30) étant fixé sur au moins une première extrémité d'entrée / de sortie de l'un des quatre tubes de mesure et sur au moins une deuxième extrémité d'entrée / de sortie de l'un des quatre tubes de mesure (1, 2, 3, 4).

9. Appareil de mesure en ligne selon la revendication précédente, pour lequel le premier système support (30) est fixé sur la première et la deuxième extrémité d'entrée / de sortie d'au moins deux des quatre, notamment de chacun des quatre, tubes de mesure (1, 2, 3, 4).

10. Appareil de mesure en ligne selon l'une des revendications précédentes,
- pour lequel les tubes de mesure (1, 2, 3, 4) sont formés et disposés dans le transmetteur de mesure de telle sorte qu'une distance latérale minimale entre le premier et le deuxième tubes de mesure (1, 2) est nettement supérieure à une distance latérale maximale entre le premier et le troisième tubes de mesure (1, 3) et/ou à une distance latérale maximale entre le deuxième et le quatrième tubes de mesure (2, 4), et/ou
- pour lequel les tubes de mesure (1, 2, 3, 4) sont formés et disposés dans le transmetteur de mesure de telle sorte qu'ils soient au moins partiellement et pour l'essentiel parallèles.

11. Appareil de mesure en ligne selon la revendication précédente, pour lequel le premier et le troisième tubes de mesure (1, 3) se touchent l'un l'autre au moins partiellement, et pour lequel le deuxième et le quatrième tubes de mesure (2, 4) se touchent l'un l'autre au moins partiellement.

12. Appareil de mesure en ligne selon l'une des revendications précédentes, pour lequel le premier et le troisième tubes de mesure (1, 3) sont couplés entre eux, pour l'essentiel de façon rigide et au moins ponctuellement, pour former un premier ensemble de tubes de mesure, lesquels tubes sont distants respectivement de leur première et deuxième extrémité d'entrée / de sortie, et pour lequel le deuxième et le quatrième tubes de mesure (2, 4) sont couplés entre eux, pour l'essentiel de façon rigide et au moins ponctuellement, pour former un deuxième ensemble de tubes de mesure, lesquels tubes sont distants respectivement de leur première et deuxième extrémité d'entrée / de sortie.

13. Appareil de mesure en ligne selon l'une des revendications précédentes, pour lequel le premier et le troisième tubes de mesure (1, 3) sont chacun distants de leur première et deuxième extrémité d'entrée / de sortie respective, et couplés entre eux au moins partiellement, pour l'essentiel de façon rigide, et pour lequel le deuxième et le quatrième tubes de mesure (2, 4) sont chacun distants de leur première et deuxième extrémité d'entrée / de sortie respective, et couplés entre eux au moins partiellement, pour l'essentiel de façon rigide.

14. Appareil de mesure en ligne selon la revendication précédente, pour lequel le premier et le troisième tubes de mesure (1, 3) sont chacun distants de leur première et deuxième extrémité d'entrée / de sortie respective, et assemblés par brasage en formant un cordon de liaison, notamment par un brasage fort, et/ou soudés, et pour lequel le deuxième et le quatrième tubes de mesure (2, 4) sont chacun distants de leur première et deuxième extrémité d'entrée / de sortie respective, et assemblés par brasage en formant un cordon de liaison, notamment par un brasage fort, et/ou soudés.

15. Appareil de mesure en ligne selon l'une des revendications 12 à 14, pour lequel un premier système de vibration formé par le premier et le troisième tubes de mesure (1, 3) et un deuxième système de vibration formé par le deuxième et le quatrième tubes de mesure (2, 4) présentent pour l'essentiel des fréquences propres identiques.

16. Appareil de mesure en ligne selon la revendication précédente, pour lequel les tubes de mesure (1, 2, 3, 4) vibrent, en fonctionnement, avec pour l'essentiel la même fréquence de vibration, notamment à une fréquence propre naturelle du premier et du deuxième système de vibration.

17. Appareil de mesure en ligne selon la revendication précédente, pour lequel le premier et le deuxième tubes de mesure (1, 2) vibrent au moins temporairement pour l'essentiel en opposition de phase l'un par rapport à l'autre, et pour lequel le troisième et le quatrième tubes de mesure (1, 2) vibrent au moins temporairement pour l'essentiel en opposition de phase l'un par rapport à l'autre.

18. Appareil de mesure en ligne selon l'une des revendications précédentes, pour lequel les vibrations exécutées, en fonctionnement, par les tubes de mesure (1, 2, 3, 4) sont formées au moins temporairement en tant que vibrations de flexion autour d'un axe reliant de façon imaginaire la première et la deuxième extrémité d'entrée / de sortie correspondante, ou autour d'un axe imaginaire parallèle à celui-ci.

19. Appareil de mesure en ligne selon l'une des revendications précédentes, pour lequel chacun des quatre tubes de mesure (1, 2, 3, 4) présente une ligne médiane reliant de façon imaginaire sa première extrémité d'entrée / de sortie correspondante et sa deuxième extrémité d'entrée / de sortie correspondante.

20. Appareil de mesure en ligne selon la revendication 19, pour lequel les tubes de mesure (1, 2, 3, 4) sont formés et disposés dans le transmetteur de mesure de telle sorte qu'au moins deux des quatre lignes médianes imaginaires s'étendent dans une surface de coupe imaginaire, commune, notamment plane, du transmetteur de mesure.

21. Appareil de mesure en ligne selon la revendication précédente, pour lequel les tubes de mesure (1, 2, 3, 4) sont formés et disposés dans le transmetteur de mesure de telle sorte que les quatre lignes médianes imaginaires sont réparties sur deux surfaces de coupe imaginaires, pour l'essentiel parallèles, notamment planes, du transmetteur de mesure.

22. Appareil de mesure en ligne selon la revendication 19, pour lequel les tubes de mesure (1, 2, 3, 4) sont formés et disposés dans le transmetteur de mesure de telle sorte que les quatre lignes médianes imaginaires sont réparties sur quatre surfaces de coupe imaginaires, pour l'essentiel parallèles, notamment planes, du transmetteur de mesure.

23. Appareil de mesure en ligne selon la revendication 19, pour lequel les tubes de mesure (1, 2, 3, 4) sont formés et disposés dans le transmetteur de mesure de telle sorte que toutes les quatre lignes médianes imaginaires s'étendent dans une surface de coupe imaginaire, commune, notamment plane, du transmetteur de mesure.

24. Appareil de mesure en ligne selon l'une des revendications précédentes, pour lequel les quatre tubes de mesure (1, 2, 3, 4) sont pour l'essentiel droits.

25. Appareil de mesure en ligne selon l'une des revendications précédentes, pour lequel les quatre tubes de mesure (1, 2, 3, 4) sont pour l'essentiel cintrés de façon égale, notamment en forme de V ou de U.

26. Appareil de mesure en ligne selon la revendication précédente, pour lequel les quatre tubes de mesure (1, 2, 3, 4) sont pour l'essentiel cintrés en forme de V.

27. Appareil de mesure en ligne selon l'une des revendications précédentes, pour lequel les quatre tubes de mesure (1, 2, 3, 4) sont pour l'essentiel formés de façon identique.

28. Appareil de mesure en ligne selon l'une des revendications précédentes, pour lequel les volumes partiels de produit (M₁) s'écoulant dans la première conduite de produit, guidés dans le premier et dans le deuxième tubes de mesure (1, 2), présentent une direction d'écoulement commune, qui est opposée au moins temporairement à une direction d'écoulement commune des volumes partiels de produit (M₂) s'écoulant dans la deuxième conduite de produit, guidés dans le troisième et dans le quatrième tubes de mesure (3, 4).

29. Appareil de mesure en ligne selon l'une des revendications précédentes, pour lequel les volumes partiels de produit (M₁) s'écoulant dans la première conduite de produit, guidés dans le premier et dans le deuxième tubes de mesure (1, 2), présentent une direction d'écoulement commune, qui est identique au moins temporairement à une direction d'écoulement commune des volumes partiels de produit (M₂) s'écoulant dans la deuxième conduite de produit, guidés dans le troisième et dans le quatrième tubes de mesure (3, 4).

30. Appareil de mesure en ligne selon l'une des revendications précédentes, pour lequel le premier système support (30) est supporté, notamment de façon apte à vibrer, par un deuxième système support extérieur, notamment abritant le transmetteur de mesure, et/ou par l'au moins une des conduites de produit raccordée.

31. Appareil de mesure en ligne selon l'une des revendications précédentes, pour lequel le transmetteur de mesure comprend au moins un capteur de température (81, 82) couplé thermiquement avec l'au moins un des tubes de mesure (1, 2, 3, 4) et réagissant aux modifications de la température de tube de mesure.

32. Appareil de mesure en ligne selon l'une des revendications précédentes, comprenant en outre une électronique de mesure et d'exploitation reliée électriquement avec le transmetteur de mesure (10) et notamment logée dans un boîtier électronique (40).

33. Appareil de mesure en ligne selon la revendication précédente, comprenant en outre un boîtier électronique (40), notamment disposé directement sur le transmetteur de mesure, l'électronique de mesure et d'exploitation étant logée dans le boîtier électronique (40).
